(19) Europäisches Patentamt / European Patent Office / Office européen des brevets

(11) **EP 3 967 024 B1**

(12) **EUROPEAN PATENT SPECIFICATION**

(45) Date of publication and mention
of the grant of the patent:
**22.07.2026 Bulletin 2026/30**

(21) Application number: **19935677.5**

(22) Date of filing: **30.12.2019**

(51) International Patent Classification (IPC):
*H04N 23/71* (2023.01)    *H04N 23/72* (2023.01)
*H04N 23/61* (2023.01)    *G06V 10/141* (2022.01)

(52) Cooperative Patent Classification (CPC):
**G06V 10/141; H04N 23/61; H04N 23/71;
H04N 23/72**

(86) International application number:
**PCT/CN2019/129747**

(87) International publication number:
**WO 2020/258808 (30.12.2020 Gazette 2020/53)**

(54) **SYSTEMS AND METHODS FOR DETERMINING EXPOSURE PARAMETER OF AN IMAGE
CAPTURE DEVICE**

SYSTEME UND VERFAHREN ZUR BESTIMMUNG DES BELICHTUNGSPARAMETERS EINER
BILDAUFNAHMEVORRICHTUNG

SYSTÈMES ET PROCÉDÉS PERMETTANT DE DÉTERMINER UN PARAMÈTRE D'EXPOSITION
D'UN DISPOSITIF DE CAPTURE D'IMAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.06.2019 CN 201910568901**

(43) Date of publication of application:
**16.03.2022 Bulletin 2022/11**

(73) Proprietor: **Zhejiang Dahua Technology Co., Ltd.
Hangzhou, Zhejiang 310053 (CN)**

(72) Inventors:
• **LEI, Chunxia**
  **Hangzhou, Zhejiang 310053 (CN)**
• **LIU, Xiaomu**
  **Hangzhou, Zhejiang 310053 (CN)**

(74) Representative: **Wang, Bo
Panovision IP
Ebersberger Straße 3
85570 Markt Schwaben (DE)**

(56) References cited:
CN-A- 1 953 515         CN-A- 103 327 259
CN-A- 104 994 306       CN-A- 106 385 544
CN-A- 107 635 102       US-A1- 2007 177 050
US-A1- 2008 226 279     US-A1- 2009 167 932
US-A1- 2010 271 507

## Description

### TECHNICAL FIELD

The present disclosure relates to the field of image processing, and in particular, to systems and methods for determining an exposure parameter of an image capture device.

### BACKGROUND

Video surveillance is becoming more and more important for security purposes, and is widely used in various locations, such as roads, shopping malls, residential areas, parking lots, etc. because it is accurate, timely, and informative. In recent years, with the advancement of technology, video surveillance techniques have developed rapidly. Generally, in video surveillance, one or more target regions (e.g., a facial region, a region including a license plate) in an image may be a concern. Thus, it is necessary to ensure that the target region(s) can be clearly displayed. However, in scenes with poor light, such as backlighting condition, reflective condition, the target region may be overexposed or underexposed, which may result in ineffective presentation of the target region. Therefore, in order to ensure that the target region has a desired brightness, it is necessary to provide systems and methods for determining one or more exposure parameters of an image capture device. Relevant prior art is disclosed in US 2008/226279 A1, US 2010/271507 A1, US 2007/177050 A1, CN 106385544 A, and CN104994306A. US 2008/226279 A1 is related to an image processor, which determines appropriate exposure parameters for a shutter assembly in a camera. US 2010/271507 A1 is related to a system and method of image capture parameter adjustment using face brightness information. US 2007/177050 A1 is related to an exposure control apparatus for controlling an exposure adjustment mechanism on the basis of a captured image signal. CN 106385544 A is related to a camera exposure control method and device. CN 104994306 A provides a camera method and camera device based on face brightness to automatically adjust the exposure.

### SUMMARY

The invention is set out in the appended set of claims.

### BRIEF DESCRIPTION OF THE DRAWINGS

The present disclosure is further described in terms of exemplary embodiments. These exemplary embodiments are described in detail with reference to the drawings. The drawings are not to scale. These embodiments are non-limiting schematic embodiments, in which like reference numerals represent similar structures throughout the several views of the drawings, and wherein:

FIG. 1 is a schematic diagram illustrating an exemplary image processing system according to some embodiments of the present disclosure;
FIG. 2 is a schematic diagram illustrating exemplary hardware and/or software components of a computing device according to some embodiments of the present disclosure;
FIG. 3 is a schematic diagram illustrating exemplary hardware and/or software components of a mobile device according to some embodiments of the present disclosure;
FIG. 4 a block diagram illustrating an exemplary processing device according to some embodiments of the present disclosure;
FIG. 5 is a flowchart illustrating an exemplary process for determining one or more exposure parameters according to some embodiments of the present disclosure;
FIG. 6 is a flowchart illustrating an exemplary process for determining a current brightness of a target region according to some embodiments of the present disclosure;
FIG. 7 is a flowchart illustrating an exemplary process for determining a current brightness of a target region according to some embodiments of the present disclosure;
FIG. 8 is a flowchart illustrating an exemplary process for determining a degree of exposure of a target region according to some embodiments of the present disclosure;
FIG. 9 is a flowchart illustrating an exemplary process for determining a current brightness of a target region according to some embodiments of the present disclosure;
FIG. 10 is a flowchart illustrating an exemplary process for determining a target region according to some embodiments of the present disclosure;
FIGs. 11A and 11B are schematic diagrams illustrating a target region in a Bayer format according to some embodiments of the present disclosure;
FIG. 12 is a flowchart illustrating an exemplary process for determining a current brightness according to some embodiments of the present disclosure;
FIG. 13 is a schematic diagram illustrating an exemplary exposure parameter determination device according to some embodiments of the present disclosure; and
FIG. 14 is a schematic diagram illustrating an exemplary storage device according to some embodiments of the present disclosure.

### DETAILED DESCRIPTION

In the following detailed description, numerous specific details are set forth by way of examples in order to provide a thorough understanding of the relevant disclosure. However, it should be apparent to those skilled in the art that the present disclosure may be practiced without such details. In other instances, well known methods, procedures, systems, components, and/or circuitry have been described at a relatively high-level, without detail, in order to avoid unnecessarily obscuring aspects of the present disclosure. Various modifications to the disclosed embodiments will be readily apparent to those skilled in the art, and the general principles defined herein may be applied to other embodiments and applications without departing from the scope of the present disclosure. Thus, the present disclosure is not limited to the embodiments shown, but to be accorded the widest scope consistent with the claims.

The terminology used herein is for the purpose of describing particular example embodiments only and is not intended to be limiting. As used herein, the singular forms "a," "an," and "the" may be intended to include the plural forms as well, unless the context clearly indicates otherwise. It will be further understood that the terms "comprise," "comprises," and/or "comprising," "include," "includes," and/or "including," when used in this specification, specify the presence of stated features, integers, steps, operations, elements, and/or components, but do not preclude the presence or addition of one or more other features, integers, steps, operations, elements, components, and/or groups thereof.

It will be understood that the term "system," "unit," "module," and/or "block" used herein are one method to distinguish different components, elements, parts, section or assembly of different level in ascending order. However, the terms may be displaced by another expression if they achieve the same purpose.

The modules (or units, blocks, units) described in the present disclosure may be implemented as software and/or hardware modules and may be stored in any type of non-transitory computer-readable medium or another storage device. In some embodiments, a software module may be compiled and linked into an executable program. It will be appreciated that software modules can be callable from other modules or from themselves, and/or can be invoked in response to detected events or interrupts. Software modules configured for execution on computing devices can be provided on a computer readable medium, such as a compact disc, a digital video disc, a flash drive, a magnetic disc, or any other tangible medium, or as a digital download (and can be originally stored in a compressed or installable format that requires installation, decompression, or decryption prior to execution). Such software code can be stored, partially or fully, on a memory device of the executing computing device, for execution by the computing device. Software instructions can be embedded in firmware, such as an EPROM. It will be further appreciated that hardware modules (e.g., circuits) can be included of connected or coupled logic units, such as gates and flip-flops, and/or can be included of programmable units, such as programmable gate arrays or processors. The modules or computing device functionality described herein are preferably implemented as hardware modules, but can be software modules as well. In general, the modules described herein refer to logical modules that can be combined with other modules or divided into units despite their physical organization or storage.

Generally, the word "module," "sub-module," "unit," or "block," as used herein, refers to logic embodied in hardware or firmware, or to a collection of software instructions. A module, a unit, or a block described herein may be implemented as software and/or hardware and may be stored in any type of non-transitory computer-readable medium or another storage device. In some embodiments, a software module/unit/block may be compiled and linked into an executable program. It will be appreciated that software modules can be callable from other modules/units/blocks or from themselves, and/or may be invoked in response to detected events or interrupts.

Software modules/units/blocks configured for execution on computing devices may be provided on a computer-readable medium, such as a compact disc, a digital video disc, a flash drive, a magnetic disc, or any other tangible medium, or as a digital download (and can be originally stored in a compressed or installable format that needs installation, decompression, or decryption prior to execution). Such software code may be stored, partially or fully, on a storage device of the executing computing device, for execution by the computing device. Software instructions may be embedded in firmware, such as an EPROM. It will be further appreciated that hardware modules/units/blocks may be included in connected logic components, such as gates and flip-flops, and/or can be included of programmable units, such as programmable gate arrays or processors. The modules/units/blocks or computing device functionality described herein may be implemented as software modules/units/blocks, but may be represented in hardware or firmware. In general, the modules/units/blocks described herein refer to logical modules/units/blocks that may be combined with other modules/units/blocks or divided into sub-modules/sub-units/sub-blocks despite their physical organization or storage. The description may be applicable to a system, an engine, or a portion thereof.

It will be understood that when a unit, engine, module or block is referred to as being "on," "connected to," or "coupled to," another unit, engine, module, or block, it may be directly on, connected or coupled to, or communicate with the other unit, engine, module, or block, or an intervening unit, engine, module, or block may be present, unless the context clearly indicates otherwise. As used herein, the term "and/or" includes any and all combinations of one or more of the associated listed items.

These and other features, and characteristics of the present disclosure, as well as the methods of operation and functions of the related elements of structure and the combination of parts and economies of manufacture, may become more apparent upon consideration of the following description with reference to the accompanying drawings, all of which form a part of this disclosure. It is to be expressly understood, however, that the drawings are for the purpose of illustration and description only and are not intended to limit the scope of the present disclosure.

The present disclosure relates to systems and methods for determining one or more exposure parameters of an image capture device. The exposure parameter(s) may be determined based on the brightness of a target region (e.g., a facial region). The systems and methods may obtain the target region within an image captured by a capture device. The systems and methods may determine a current brightness of the target region based on gray information of the target region, and determine a target brightness of the target region based on the current brightness of the target region. The systems and methods may determine the exposure parameter(s) of the capture device based on the target brightness of the target region.

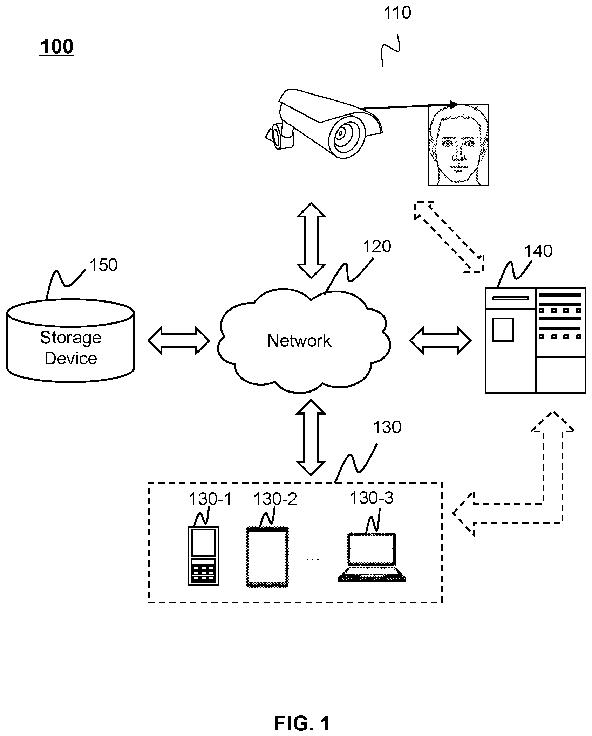

FIG. 1 is a schematic diagram illustrating an exemplary image processing system 100 according to some embodiments of the present disclosure. The image processing system 100 may include a capture device 110 (also referred to as an image capture device), a network 120, a terminal 130, a processing device 140, and a storage device 150. The components of the image processing system 100 may be connected to each other in one or more of various ways. Merely by way of example, as illustrated in FIG. 1, the capture device 110 may be connected to the processing device 140 via the network 120. As another example, the capture device 110 may be connected to the processing device 140 directly as indicated by the bi-directional arrow in dotted lines linking the capture device 110 and the processing device 140. As a further example, the storage device 150 may be connected to the processing device 140 directly or through the network 120. As still a further example, the terminal 130 may be connected to the processing device 140 directly (as indicated by the bi-directional arrow in dotted lines linking the terminal 130 and the processing device 140) or through the network 120.

The capture device 110 may be configured to capture one or more images. As used in this application, an image may be a still image, a video, a stream video, or a video frame obtained from a video. The image may be a two-dimensional (2D) image, a three-dimensional (3D) image, a four-dimensional (4D) image, or thel like. In some embodiments, the image may include one or more target regions, such as a facial region, a region including a license plate, or the like. The capture device 110 may be or include one or more cameras. In some embodiments, the capture device 110 may be a digital camera, a video camera, a security camera, a web camera, a smartphone, a tablet, a laptop, a video gaming console equipped with a web camera, a camera with multiple lenses, a camcorder, etc. In some embodiments, the capture device 110 may be a visible light camera, an infrared camera, or the like.

The network 120 may facilitate the exchange of information and/or data. In some embodiments, one or more components of the image processing system 100 (e.g., the capture device 110, the terminal 130, the processing device 140, the storage device 150) may send information and/or data to another component(s) in the image processing system 100 via the network 120. For example, the processing device 140 may process an image obtained from the capture device 110 via the network 120. As another example, the capture device 110 may obtain user instructions from the terminal 130 via the network 120. In some embodiments, the network 120 may be any type of wired or wireless network, or combination thereof. Merely by way of example, the network 120 may include a cable network, a wireline network, an optical fiber network, a telecommunications network, an intranet, an Internet, a local area network (LAN), a wide area network (WAN), a wireless local area network (WLAN), a metropolitan area network (MAN), a wide area network (WAN), a public telephone switched network (PSTN), a Bluetooth™ network, a ZigBee™ network, a near field communication (NFC) network, or the like, or any combination thereof. In some embodiments, the network 120 may include one or more network access points. For example, the network 120 may include wired or wireless network access points such as base stations and/or internet exchange points 120-1, 120-2, ..., through which one or more components of the image processing system 100 may be connected to the network 120 to exchange data and/or information.

The terminal 130 include a mobile device 130-1, a tablet computer 130-2, a laptop computer 130-3, or the like, or any combination thereof. In some embodiments, the mobile device 130-1 may include a smart home device, a wearable device, a smart mobile device, a virtual reality device, an augmented reality device, or the like, or any combination thereof. In some embodiments, the smart home device may include a smart lighting device, a control device of an intelligent electrical apparatus, a smart monitoring device, a smart television, a smart video camera, an interphone, or the like, or any combination thereof. In some embodiments, the wearable device may include a bracelet, footgear, eyeglasses, a helmet, a watch, clothing, a backpack, an accessory, or the like, or any combination thereof. In some embodiments, the smart mobile device may include a smartphone, a personal digital assistant (PDA), a gaming device, a navigation device, a point of sale (POS) device, or the like, or any combination thereof. In some embodiments, the virtual reality device and/or the augmented reality device may include a virtual reality helmet, a virtual reality glass, a virtual reality patch, an augmented reality helmet, an augmented reality glass, an augmented reality patch, or the like, or any combination thereof. For example, the virtual reality device and/or the augmented reality device may include a Google Glass™, an Oculus Rift™ a HoloLens™, a Gear VR™, etc. In some embodiments, the terminal 130 may remotely operate the capture device 110. In some embodiments, the terminal 130 may operate the capture device 110 via a wireless connection. In some embodiments, the terminal 130 may receive information and/or instructions inputted by a user, and send the received information and/or instructions to the capture device 110 or to the processing device 140 via the network 120. In some embodiments, the terminal 130 may be part of the processing device 140. In some embodiments, the terminal 130 may be omitted.

In some embodiments, the processing device 140 may process data obtained from the capture device 110, the terminal 130, or the storage device 150. For example, the processing device 140 may obtain a target region within an image captured by the capture device 110. As another example, the processing device 140 may determine one or more exposure parameters of the capture device 110 based on the target region. The processing device 140 may be a central processing unit (CPU), a digital signal processor (DSP), a system on a chip (SoC), a microcontroller unit (MCU), or the like, or any combination thereof. In some embodiments, the processing device 140 may be a single server or a server group. The server group may be centralized or distributed. In some embodiments, the processing device 140 may be local to or remote from one or more other components of the image processing system 100. For example, the processing device 140 may access information and/or data stored in the capture device 110, the terminal 130, and/or the storage device 150 via the network 120. As another example, the processing device 140 may be directly connected to the capture device 110, the terminal 130, and/or the storage device 150, to access stored information and/or data. In some embodiments, the processing device 140 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof.

The storage device 150 may store data and/or instructions. In some embodiments, the storage device 150 may store data or images obtained from the capture device 110, the terminal 130 and/or the processing device 140. In some embodiments, the storage device 150 may store data and/or instructions that the processing device 140 may execute or use to perform exemplary methods described in the present disclosure. In some embodiments, the storage device 150 may include a mass storage, removable storage, a volatile read-and-write memory, a read-only memory (ROM), or the like, or any combination thereof. Exemplary mass storage may include a magnetic disk, an optical disk, a solid-state drive, etc. Exemplary removable storage may include a flash drive, a floppy disk, an optical disk, a memory card, a zip disk, a magnetic tape, etc. Exemplary volatile read-and-write memory may include a random-access memory (RAM). Exemplary RAM may include a dynamic RAM (DRAM), a double date rate synchronous dynamic RAM (DDR SDRAM), a static RAM (SRAM), a thyristor RAM (T-RAM), and a zero-capacitor RAM (Z-RAM), etc. Exemplary ROM may include a mask ROM (MROM), a programmable ROM (PROM), an erasable programmable ROM (PEROM), an electrically erasable programmable ROM (EEPROM), a compact disk ROM (CD-ROM), and a digital versatile disk ROM, etc. In some embodiments, the storage device 150 may be implemented on a cloud platform. Merely by way of example, the cloud platform may include a private cloud, a public cloud, a hybrid cloud, a community cloud, a distributed cloud, an inter-cloud, a multi-cloud, or the like, or any combination thereof.

In some embodiments, the storage device 150 may be connected to the network 120 to communicate with one or more components of the image processing system 100 (e.g., the capture device 110, the terminal 130, the processing device 140). One or more components in the image processing system 100 may access the data or instructions stored in the storage device 150 via the network 120. In some embodiments, the storage device 150 may be directly connected to or communicate with one or more components in the image processing system 100 (e.g., the capture device 110, the terminal 130, the processing device 140). In some embodiments, the storage device 150 may be part of the capture device 110, or the processing device 140.

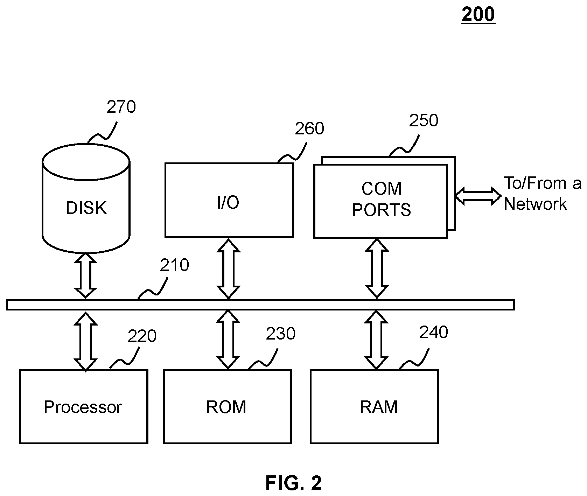

FIG. 2 is a schematic diagram illustrating exemplary hardware and software components of a computing device 200 according to some embodiments of the present disclosure. In some embodiments, the capture device 110, the terminal 130, the processing device 140 may be implemented on the computing device 200. For example, the processing device 140 may be implemented on the computing device 200 and configured to perform functions of the processing device 140 disclosed in this disclosure.

The computing device 200 may be a special purpose computer used to implement a multimedia content processing system for the present disclosure. The computing device 200 may be used to implement any component of the multimedia content processing system as described herein. For example, the processing device 140 may be implemented on the computing device, via its hardware, software program, firmware, or a combination thereof. Although only one such computer is shown, for convenience, the computer functions relating to the image processing as described herein may be implemented in a distributed fashion on a number of similar platforms, to distribute the processing load.

The computing device 200, for example, may include a COM port 250 connected to and/or from a network connected thereto to facilitate data communications. The computing device 200 may also include a processor 220, in the form of one or more processors (or CPUs), for executing program instructions. The exemplary computing device may include an internal communication bus 210, different types of program storage units and data storage units (e.g., a disk 270, a read only memory (ROM) 230, a random access memory (RAM) 240), various data files applicable to computer processing and/or communication. The exemplary computing device may also include program instructions stored in the ROM 230, RAM 240, and/or another type of non-transitory storage medium to be executed by the processor 220. The method and/or process of the present disclosure may be implemented as the program instructions. The computing device 200 also includes an I/O device 260 that may support the input and/or output of data flows between the computing device 200 and other components. The computing device 200 may also receive programs and data via the communication network.

Merely for illustration, only one CPU and/or processor is described in the computing device 200. However, it should be noted that the computing device 200 in the present disclosure may also include multiple CPUs and/or processors, thus operations and/or method steps that are performed by one CPU and/or processor as described in the present disclosure may also be jointly or separately performed by the multiple CPUs and/or processors. For example, if in the present disclosure the CPU and/or processor of the computing device 200 executes both step A and step B, it should be understood that step A and step B may also be performed by two different CPUs and/or processors jointly or separately in the computing device 200 (e.g., the first processor executes operation A and the second processor executes operation B, or the first and second processors jointly execute operations A and B).

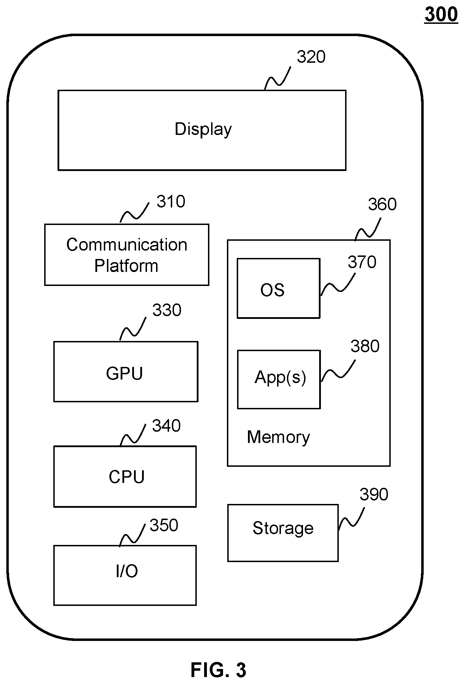

FIG. 3 is a schematic diagram illustrating exemplary hardware and/or software components of a mobile device 300 according to some embodiments of the present disclosure. In some embodiments, the mobile device 300 may be an exemplary embodiment corresponding to the terminal 130. As illustrated in FIG. 3, the mobile device 300 may include a communication platform 310, a display 320, a graphics processing unit (GPU) 330, a central processing unit (CPU) 340, an I/O 350, a memory 360, and a storage 390. In some embodiments, any other suitable component, including but not limited to a system bus or a controller (not shown), may also be included in the mobile device 300.

In some embodiments, an operating system 370 (e.g., iOS™, Android™, Windows Phone™, etc.) and one or more applications 380 may be loaded into the memory 360 from the storage 390 in order to be executed by the CPU 340. The applications 380 may include a browser or any other suitable mobile apps for receiving and rendering information relating to image processing or other information from the image processing system 100. User interactions with the information stream may be achieved via the I/O 350 and provided to the storage device 150, the capture device 110 and/or other components of the image processing system 100.

To implement various modules, units, and their functionalities described in the present disclosure, computer hardware platforms may be used as the hardware platform(s) for one or more of the elements described herein. A computer with user interface elements may be used to implement a personal computer (PC) or any other type of work station or terminal device. A computer may also act as a system if appropriately programmed.

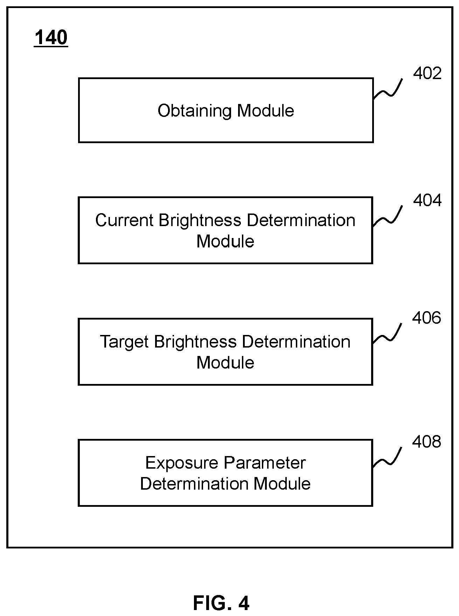

FIG. 4 is a block diagram illustrating an exemplary processing device according to some embodiments of the present disclosure. The processing device 140 includes an obtaining module 402, a current brightness determination module 404, a target brightness determination module 406, and an exposure parameter determination module 408. The modules may be hardware circuits of all or part of the processing device 140. The modules may also be implemented as an application or a set of instructions read and executed by the processing device 140. Further, the modules may be any combination of the hardware circuits and the application/instructions. For example, the modules may be the part of the processing device 140 when the processing device 140 is executing the application/set of instructions.

The obtaining module 402 may be configured to obtain information and/or data related to the image processing system 100. In some embodiments, the obtaining module 402 obtains a target region within an image captured by a capture device (e.g., the capture device 110). In some embodiments, the image may be a two-dimensional (2D) image, a three-dimensional (3D) image, a four-dimensional (4D) image, or thel like. The image may be an unprocessed image (e.g., a raw image), or a processed image (e.g., an image in YUV domain, an image in RGB domain). In some embodiments, the image may include one or more target regions. The target region may be a region in the image that needs to be highlighted. For example, if the image is a vehicle image, the target region may be a region including a license plate. As another example, if the image is a human image, the target region may be a facial region.

In some embodiments, the obtaining module 402 may obtain the target region (or the image) from one or more components of the image processing system 100, such as the capture device 110, the terminal 130, a storage device (e.g., the storage device 150), etc. Alternatively, the obtaining module 402 may obtain the target region (or the image) from an external source (e.g., a cloud disk) via the network 120.

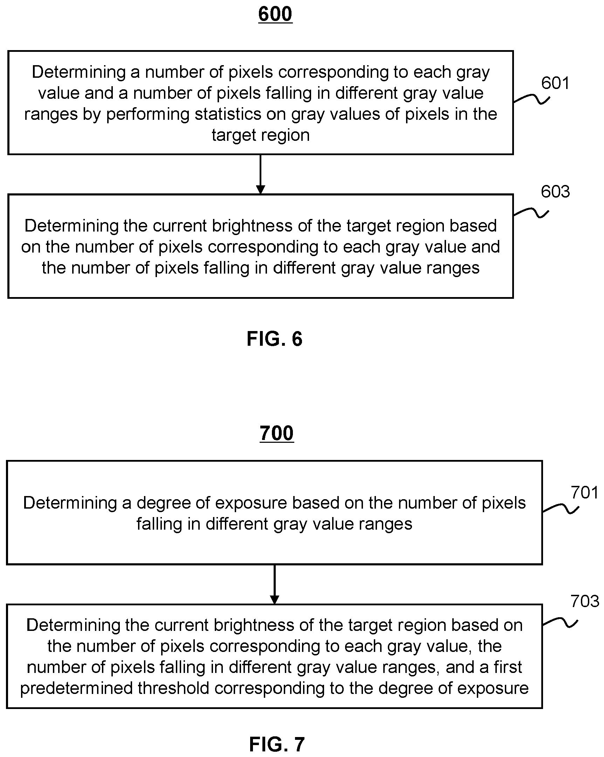

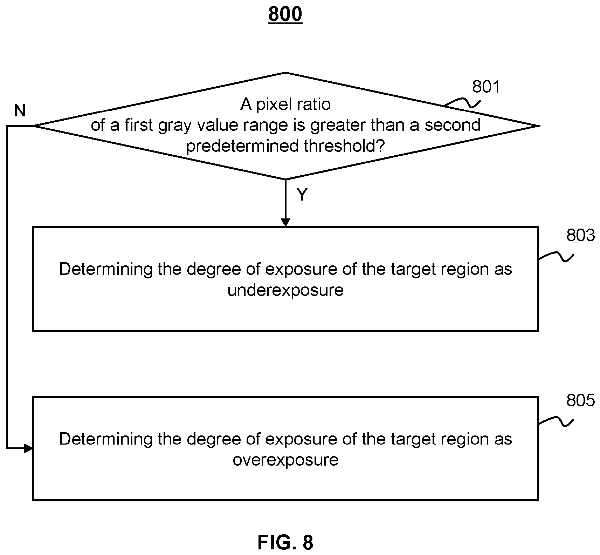

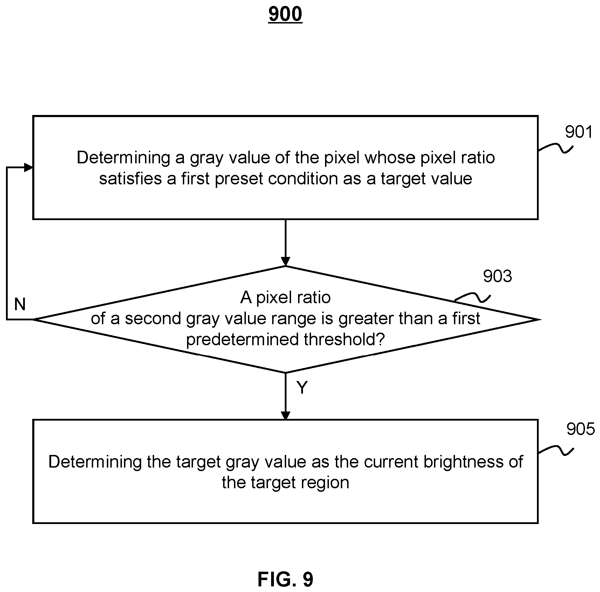

The current brightness determination module 404 is configured to determine a current brightness of the target region based on gray information of the target region. In some embodiments, the gray information may include a gray level of the target region, a gray value of each pixel in the target region, a distribution of gray values of pixels in the target region, or the like, or any combination thereof. According to the claimed invention, the current brightness determination module 404 determines the current brightness of the target region based on the gray value of each pixel of the target region. For example, the current brightness determination module 404 determines a number of pixels corresponding to each gray value and a number of pixels falling in different gray value ranges by performing statistics on gray values of pixels in the target region. The current brightness determination module 404 determines the current brightness of the target region based on the number of pixels corresponding to each gray value and the number of pixels falling in different gray value ranges. More descriptions regarding the determination of the current brightness may be found elsewhere in the present disclosure (e.g., FIGs. 6-9 and the descriptions thereof).

The target brightness determination module 406 is configured to determine a target brightness of the target region based on the current brightness of the target region. In some embodiments, if the current brightness of the target region is within a predetermined brightness range, the target brightness determination module 406 may determine the current brightness as the target brightness. If the current brightness of the target region is not within the predetermined brightness range, the target brightness determination module 406 may determine the target brightness based on the current brightness and a brightness mapping relationship. More descriptions regarding the determination of the target brightness may be found elsewhere in the present disclosure (e.g., operation 505 of process 500, and the descriptions thereof).

The exposure parameter determination module 408 is configured to determine one or more exposure parameters of the capture device based on the target brightness of the target region. In some embodiments, the exposure parameter determination module 408 may adjust the exposure parameter(s) based on the target brightness of the target region, and determine a desired brightness of the target region.

The modules in the processing device 140 may be connected to or communicate with each other via a wired connection or a wireless connection. The wired connection may include a metal cable, an optical cable, a hybrid cable, or the like, or any combination thereof. The wireless connection may include a Local Area Network (LAN), a Wide Area Network (WAN), a Bluetooth, a ZigBee, a Near Field Communication (NFC), or the like, or any combination thereof.

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure. In some embodiments, the processing device 140 may further include one or more additional modules. For example, the processing device 140 may further include a storage module (not shown in FIG. 4) configured to store data generated by one or more of the modules of the processing device 140. As another example, the processing device 140 may.

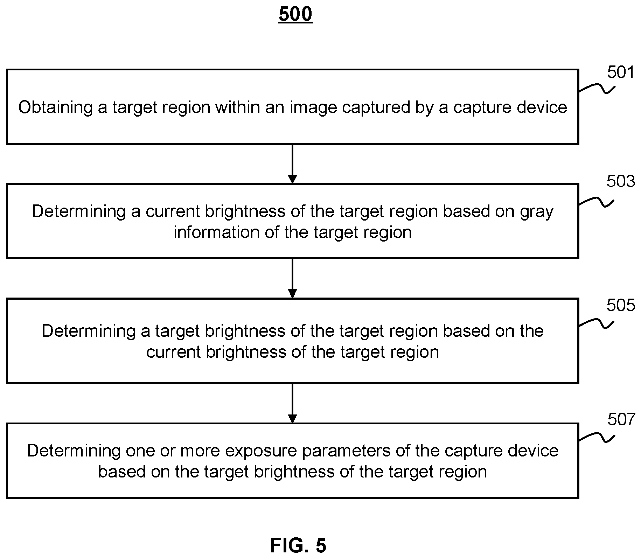

FIG. 5 is a flowchart illustrating an exemplary process for determining one or more exposure parameters according to some embodiments of the present disclosure. For illustration purpose only, the processing device 140 may be described as a subject to perform the process 500. However, one of ordinary skill in the art would understand that the process 500 may also be performed by other entities. For example, one of ordinary skill in the art would understand that at least a portion of the process 500 may also be implemented on the computing device 200 as illustrated in FIG. 2 or the mobile device 300 as illustrated in FIG. 3. In some embodiments, one or more operations of process 500 may be implemented in the image processing system 100 as illustrated in FIG. 1. In some embodiments, one or more operations in the process 500 may be stored in the storage device 150 and/or the storage (e.g., the ROM 230, the RAM 240, etc.) in the form of instructions, and invoked and/or executed by the processing device 140 (e.g., the processor 220 of the processing device 140, or one or more modules of the processing device 140). In some embodiments, the instructions may be transmitted in the form of electronic current or electrical signals.

In 501, the processing device 140 (e.g., the obtaining module 402) obtains a target region within an image captured by a capture device (e.g., the capture device 110).

In some embodiments, the capture device may include one or more visible light cameras. The capture device may be applied to a road (e.g., a highway, a provincial road, a city road), a station (e.g., a bus station, a train station, a metro station), a shopping mall, a hospital, a hotel, a scenic area, a community, or the like, or any combination thereof. In some embodiments, the capture device may be used to capture an image including vehicle(s) (also referred to as vehicle image), an image including non-motor vehicle(s) (also referred to as non-motor vehicle image), an image including human(s) (also referred to as human image), or the like, or any combination thereof.

In some embodiments, the image may be a two-dimensional (2D) image, a three-dimensional (3D) image, a four-dimensional (4D) image, or thel like. The image may include a visible light image. The visible light image may refer to an image captured by the capture device (e.g., a visible light camera) within a visible light range. In some embodiments, the image may be a processed image (e.g., an image in YUV domain, an image in RGB domain). Alternatively, the image may be a raw image (an unprocessed image), thereby saving the subsequent image signal processing (ISP) process and improving a response speed of exposure parameter adjustment.

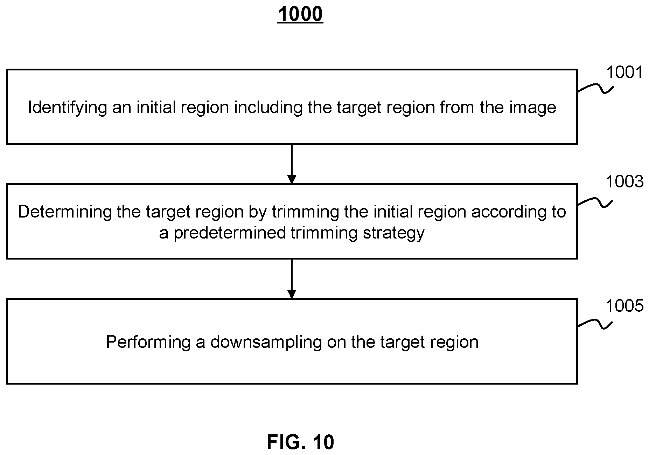

In some embodiments, the image may include one or more target regions. The target region may be a region in the image that needs to be highlighted. For example, if the image is a vehicle image, the target region may be a region including a license plate. As another example, if the image is a human image, the target region may be a facial region. In some embodiments, the processing device 140 may identify the target region from the image. The processing device 140 may perform a downsampling on the target region. More descriptions regarding the target region may be found elsewhere in the present disclosure (e.g., FIG. 10 and the descriptions thereof).

In some embodiments, the processing device 140 may obtain the target region (or the image) from one or more components of the image processing system 100, such as the capture device 110, the terminal 130, a storage device (e.g., the storage device 150), etc. The processing device 140 may obtain the target region (or the image) from the capture device 110 in real time. For example, the processing device 140 may obtain the target region (or the image) from the capture device 110 via a real-time stream protocol (RTSP). Alternatively or additionally, the processing device 140 may obtain the target region (or the image) from an external source (e.g., a cloud disk) via the network 120.

In 503, the processing device 140 (e.g., the current brightness determination module 404) determines a current brightness of the target region based on gray information of the target region. The gray information of the target region may include a gray level of the target region, a gray value of each pixel in the target region, a distribution of gray values of pixels in the target region, or the like, or any combination thereof.

In some embodiments, the gray level may refer to the difference in brightness of pixels in a monochrome display, or the difference in color of pixels in a color display. The more the gray level is, the clearer the hierarchy of image is. The gray level is determined by the number of bits of a refresh storage unit corresponding to each pixel and the performance of the display (e.g., the monochrome display, the color display). The gray level may include a 16-gray level, 32-gray level, 64-gray level, 256-gray level, or the like. The gray value may be the value that represents the brightness of a pixel in an image (e.g., a monochrome image). For example, if the gray values in an image are represented by 8-bit binary data, the range of the gray values is between 0 and 255. For example, the gray value of the pixel may be 0, 10, 20, 30, or the like. The smaller the gray value(s) are, the darker the corresponding pixel(s) are. The larger the gray value(s) are, the brighter the corresponding pixel(s) are.

In some embodiments, the target region (or the image) may be a color image (e.g., an image in YUV domain, an image in RGB domain). The processing device 140 may convert the color image into a monochrome image. In some embodiments, the processing device 140 may convert the pixel value of a pixel in the color image (e.g., an image in RGB domain) into the corresponding gray value in the monochrome image according to different application needs. For example, the pixel value of a pixel in the color image may be converted to the corresponding gray value by determining a weighted average of red color value, green color value, and blue color value. For example, the gray value of the pixel in the monochrome image may be determined according to Equation (1) as below:

$$V = 0.3R + 0.6G + 0.1B, \qquad (1)$$

wherein V refers to the gray value of the pixel in the monochrome image; R refers to the red color value in the color image; G refers to the green color value in the color image; and B refers to the blue color value in the color image.

In some embodiments, the processing device 140 may convert the pixel value of the pixel in the color image into the corresponding gray value in the monochrome image by determining the average of the red color value, the green color value, and the blue color value corresponding to the pixel; or by determining the maximum value among the red color value, the green color value, and the blue color value corresponding to the pixel. In some embodiments, the image may be a raw image, and the processing device 140 may perform a G-channel downsampling on the target region (see, e.g., operation 1005 of process 1000). The downsampled target region may include one or more pixels with G color value. The processing device 140 may convert the G color value of each pixel in the downsampled target region into the gray value of the pixel. For example, the processing device 140 may determine the G color value of each pixel as the gray value of the pixel.

In some embodiments, the current brightness of the target region may include the degree of exposure of the target region, such as overexposure, underexposure, etc. Alternatively, the current brightness of the target region may include the brightness level of the target region, such as too dark, too bright, normal. Alternatively, the current brightness of the target region may be represented by a specific brightness value, such as 50, 60, 70, etc. The processing device 140 may determine the current brightness of the target region based on the gray information (e.g., the gray value of each pixel) of the target region. More descriptions of the determination of the current brightness may be found elsewhere in the present disclosure (e.g., FIG. 6 and the descriptions thereof). These alternative methods for representing current brightness are not encompassed by the wording of the claims but are considered as useful for understanding the invention.

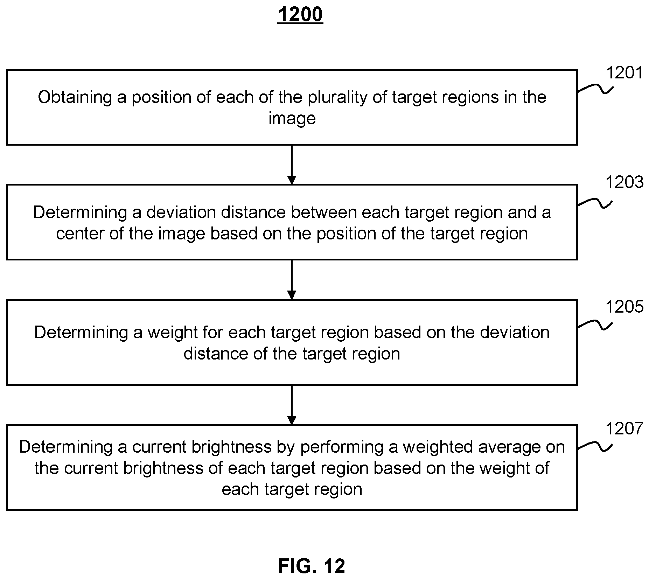

In some embodiments, the image may include a plurality of target regions. The processing device 140 may identify a target region with a largest size among the plurality of target regions. The size of a target region may be measured by the length of a diagonal of the target region, or the number of pixels in the target region, or the like. The processing device 140 may then determine the current brightness of the target region with the largest size based on its gray information. The processing device 140 may determine the current brightness of the target region with the largest size as the current brightness. Alternatively or additionally, the processing device 140 may determine the current brightness of each target region based on their gray information. The processing device 140 may determine a weighted average of the plurality of target regions as the current brightness of the image based on the current brightness of each target region. More descriptions regarding the determination of the current brightness may be found elsewhere in the present disclosure (e.g., FIG. 12 and the descriptions thereof).

In 505, the processing device 140 (e.g., the target brightness determination module 406) determines a target brightness of the target region based on the current brightness of the target region.

In some embodiments, the processing device 140 may determine whether the current brightness of the target region is within a predetermined brightness range. In some embodiments, the predetermined brightness range may be a default brightness range or an empirical brightness range related to the image processing system 100. Alternatively, the predetermined brightness range may vary according to different conditions. Merely by way of example, the predetermined brightness range may be [70, 150], [80, 160], [60, 120], or the like.

If the current brightness of the target region is within the predetermined brightness range, the processing device 140 may determine the current brightness as the target brightness. For example, assuming that the predetermined brightness range may be [80, 160]. If the current brightness of the target region is 90, which is within the predetermined brightness range of [80, 160], the processing device 140 may determine the current brightness as the target brightness.

In some embodiments, if the current brightness of the target region is less than the minimum value of the predetermined brightness range, the processing device 140 may adjust the current brightness, e.g., increasing the current brightness, to obtain the target brightness. The smaller the current brightness is, the greater the adjustment of the current brightness is. For example, if the current brightness is 75, slightly smaller than the minimum value of the predetermined brightness range [80, 160], the processing device 140 may slightly increase the current brightness to determine the target brightness. As another example, if the current brightness is 20, much smaller than the minimum value of the predetermined brightness range [80, 160], the processing device 140 may need to greatly increase the current brightness to obtain the target brightness.

In some embodiments, if the current brightness of the target region is greater than the maximum value of the predetermined brightness range, the processing device 140 may adjust the current brightness, e.g., decreasing the current brightness, to reach the target brightness. The greater the current brightness is, the greater the adjustment of the current brightness is. For example, if the current brightness is 161, slightly greater than the maximum value of the predetermined brightness range [80, 160], the processing device 140 may slightly decrease the current brightness to determine the target brightness. As another example, if the current brightness is 230, much greater than the maximum value of the predetermined brightness range [80, 160], the processing device 140 may need to greatly decrease the current brightness to determine the target brightness.

In some embodiments, the current brightness of the target region is not within the predetermined brightness range, the processing device 140 may determine the target brightness based on the current brightness and a brightness mapping relationship. The brightness mapping relationship may be a correspondence between one or more target brightness values and one or more current brightness values. In some embodiments, the one or more target brightness values may be values within the predetermined brightness range. The current brightness values within different value ranges may correspond to different target brightness values. For example, the current brightness values within a first value range (e.g., the value range [0, 20]) may correspond to a first target brightness value; the current brightness values within a second value range (e.g., the value range [20, 40]) may correspond to a second target brightness value; the current brightness values within a third value range (e.g., the value range [40, 60]) may correspond to a third target brightness value; or the like. In some embodiments, the processing device 140 may determine the brightness corresponding to the current brightness as the target brightness according to the brightness mapping relationship. For example, if the current brightness belongs to the second value range (i.e., the value range [20, 40]), the processing device 140 may determine the second target brightness value as the target brightness.

In 507, the processing device 140 (e.g., the exposure parameter determination module 408) determines one or more exposure parameters of the capture device (e.g., the capture device 110) based on the target brightness of the target region. In some embodiments, the exposure parameter(s) may include an aperture value, an exposure time, a shutter speed, a gain, or the like. The processing device 140 may adjust the exposure parameter(s) based on the target brightness of the target region, and determine a desired brightness of the target region.

In some embodiments of the present disclosure, the processing device 140 may obtain the target region within the image, determine the current brightness of the target region based on the gray information of the target region, determine the target brightness of the target region based on the current brightness, and determine the exposure parameter(s) based on the target brightness. In some embodiments, the target brightness of the target region may be determined based on the current brightness, and the exposure parameter(s) may further be determined based on the target brightness of the target region, which may ensure the effective presentation of the target region in the image. Besides, the exposure parameter(s) may be adjusted and/or varied based on the current brightness of the target region under different situations, which may facilitate the adaptive exposure of the capture device (e.g., the capture device 110), thereby improving the adaptability of the capture device to different scenes.

It should be noted that the above description regarding the process 500 is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure. In some embodiments, one or more other optional operations (e.g., a storing operation) may be added elsewhere in the process 500. In the storing operation, the processing device 140 may store information and/or data (e.g., the current brightness of the target region, the target brightness of the target region) associated with the image processing system 100 in a storage device (e.g., the storage device 140) disclosed elsewhere in the present disclosure.

FIG. 6 is a flowchart illustrating an exemplary process for determining a current brightness of a target region according to some embodiments of the present disclosure. For illustration purpose only, the processing device 140 may be described as a subject to perform the process 600. However, one of ordinary skill in the art would understand that the process 600 may also be performed by other entities. For example, one of ordinary skill in the art would understand that at least a portion of the process 600 may also be implemented on the computing device 200 as illustrated in FIG. 2 or the mobile device 300 as illustrated in FIG. 3. In some embodiments, one or more operations of process 600 may be implemented in the image processing system 100 as illustrated in FIG. 1. In some embodiments, one or more operations in the process 600 may be stored in the storage device 150 and/or the storage (e.g., the ROM 230, the RAM 240, etc.) in the form of instructions, and invoked and/or executed by the processing device 140 (e.g., the processor 220 of the processing device 140, or one or more modules of the processing device 140). In some embodiments, the instructions may be transmitted in the form of electronic current or electrical signals. In some embodiments, the process 600 may be an embodiment of operation 503 of the process 500.

In 601, the processing device 140 (e.g., the current brightness determination module 404) determines a number of pixels corresponding to each gray value and a number of pixels falling in different gray value ranges by performing statistics on gray values of pixels in the target region.

In some embodiments, the target region may include M*N pixels. The pixels in the target region may be expressed as p(i, j), wherein i is an integer from 0 to M; and j is an integer from 0 to N. In some embodiments, the processing device 140 may perform statistics on the gray value of each pixel p(i, j). The processing device 140 may determine the number of pixels corresponding to each gray value after performing the statistics on the gray value of each pixel p(i, j). The number of pixels corresponding to each gray value may be represented as a gray value histogram, in which the number of pixels is the coordinate on Y-axis and the gray value is the coordinate on X-axis. For example, the number of pixels with gray value 0 may be 10, the number of pixels with gray value 1 may be 21, the number of pixels with gray value 2 may be 3, or the like.

In some embodiments, the processing device 140 may also determine the number of pixels falling in different gray value ranges after performing the statistics on the gray value of each pixel p(i, j). The number of pixels falling in different gray value ranges may be represented as a gray value cumulative histogram. For example, the processing device 140 may determine the number of pixels falling in a first gray value range (e.g., the number of pixels falling in gray value range [0, 0] may be 10), the number of pixels falling in a second gray value range (e.g., the number of pixels falling in gray value range [0, 1] may be 31, the number of pixels falling in a third gray value range (e.g., the number of pixels falling in gray value range [0, 2] may be 34), or the like. The processing device 140 may determine the gray value as the coordinate on X-axis and the number of pixels falling in different gray value ranges as the coordinate on Y-axis to establish the gray value cumulative histogram. According to the claimed invention, the gray value ranges start at 0.

It should be noted that the above description is merely for illustration purposes, and is not intended to limit the scope of the present disclosure. In some embodiments, the processing device 140 may determine a ratio of the number of pixels with a certain gray value to the total number of pixels in the target region as the coordinate on Y-axis of the gray value histogram. The processing device 140 may determine a ratio of the number of pixels in a gray value range to the total number of pixels in the target region as a coordinate on Y-axis of the gray value cumulative histogram.

In 602, the processing device 140 (e.g., the current brightness determination module 404) may determine the current brightness of the target region based on the number of pixels corresponding to each gray value and the number of pixels falling in different gray value ranges. In some embodiments, the processing device 140 may determine a degree of exposure of the target region based on the number of pixels falling in different gray value ranges. The degree of exposure may include overexposure, underexposure, or the like. The processing device 140 may then determine the current brightness of the target region based on the number of pixels corresponding to each gray value and the number of pixels falling in different gray value ranges, a first predetermined threshold corresponding to the degree of exposure. Details regarding the determination of the current brightness of the target region may be found elsewhere in the present disclosure (e.g., FIGs. 7-9 and the descriptions thereof).

It should be noted that the above description regarding the process 600 is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure. In some embodiments, one or more other optional operations (e.g., a storing operation) may be added elsewhere in the process 600. In the storing operation, the processing device 140 may store information and/or data (e.g., the number of pixels corresponding to each gray value, the number of pixels falling in different gray value ranges) associated with the image processing system 100 in a storage device (e.g., the storage device 140) disclosed elsewhere in the present disclosure.

FIG. 7 is a flowchart illustrating an exemplary process for determining a current brightness of a target region according to some embodiments of the present disclosure. For illustration purpose only, the processing device 140 may be described as a subject to perform the process 700. However, one of ordinary skill in the art would understand that the process 700 may also be performed by other entities. For example, one of ordinary skill in the art would understand that at least a portion of the process 700 may also be implemented on the computing device 200 as illustrated in FIG. 2 or the mobile device 300 as illustrated in FIG. 3. In some embodiments, one or more operations of process 700 may be implemented in the image processing system 100 as illustrated in FIG. 1. In some embodiments, one or more operations in the process 700 may be stored in the storage device 150 and/or the storage (e.g., the ROM 230, the RAM 240, etc.) in the form of instructions, and invoked and/or executed by the processing device 140 (e.g., the processor 220 of the processing device 140, or one or more modules of the processing device 140). In some embodiments, the instructions may be transmitted in the form of electronic current or electrical signals. In some embodiments, the process 700 may be an embodiment of operation 603 of the process 600.

In 701, the processing device 140 (e.g., the current brightness determination module 404) determines a degree of exposure based on the number of pixels falling in different gray value ranges.

The of exposure includes underexposure, overexposure, or the like. The "underexposure" may mean that the image is too dark, and thus the brighter parts of the image can be recognizable and the darker parts of the image cannot be shown in detail. The "overexposure" may mean that the image is too bright, and thus the darker parts of the image can be recognizable and the brighter parts of the image cannot be shown in detail.

In some embodiments, the processing device 140 may determine whether the degree of exposure is underexposure or overexposure according to process 800.

In 801, the processing device 140 (e.g., the current brightness determination module 404) may determine whether a pixel ratio of a first gray value range is greater than a second predetermined threshold based on the number of pixels in different gray value ranges. The pixel ratio of the first gray value range may be a ratio of the number of pixels falling in the first gray value range to the total number of pixels in the target region. In some embodiments, the first gray value range may be a default value range or an empirical value range related to the image processing system 100. Alternatively, the first gray value range may be different value ranges according to different conditions. Merely by way of example, the first gray value range may be a gray value range of [0, 30], a gray value range of [0, 50], a gray value range of [0, 60], a gray value range of [0, 100], or the like. The second predetermined threshold may be a default value or an empirical value related to the image processing system 100. In some embodiments, the second predetermined threshold may be set according to a default setting of the image processing system 100. For example, the second predetermined threshold may be 20%, 30%, 35%, 40%, 50%, etc.

In response to a determination that the pixel ratio is greater than the second predetermined threshold, the processing device 140 may determine that the target region is too dark, and may proceed to operation 803. In 803, the processing device 140 (e.g., the current brightness determination module 404) may determine the degree of exposure of the target region as underexposure. Merely by way of example, the second predetermined threshold may be 40%. The first gray value range may be the gray value range of [0, 50]. Assuming that the total number of pixels in the target region may be 1000, and the number of pixels in the first gray value range may be 700. The pixel ratio of the first gray value range may be 70%, which is greater than the second predetermined threshold (40%). That is, the target region is too dark, and the degree of exposure of the target region may be determined as underexposure.

In response to a determination that the pixel ratio is less than or equal to the second predetermined threshold, the processing device 140 may determine that the target region is too bright, and may proceed to operation 805. In 805, the processing device 140 (e.g., the current brightness determination module 404) may determine the degree of exposure of the target region as overexposure. Merely by way of example, the second predetermined threshold may be 40%. The first gray value range may be the gray value range of [0, 50]. Assuming that the total number of pixels in the target region may be 1000, and the number of pixels falling in the first gray value range may be 100. The pixel ratio of the first gray value range may be 10%, which is less than the second predetermined threshold (40%). That is, the target region is too bright, and the degree of exposure of the target region may be determined as overexposure.

The degree of exposure includes underexposure, normal, overexposure, or the like. In some embodiments, the second predetermined threshold may be a value range, such as [35%, 45%], [30%, 50%], [25%, 50%], [20%, 60%], etc. If the pixel ratio of the first gray value range is greater than the maximum value of the value range, the processing device 140 may determine the degree of exposure as underexposure. If the pixel ratio of the first gray value range is within the value range, the processing device 140 may determine the degree of exposure as normal. If the pixel ratio of the first gray value range is less than the minimum value of the value range, the processing device 140 may determine the degree of exposure as overexposure. Merely by way of example, the second predetermined threshold may be a value range of [35%, 45%]. If the pixel ratio of the first gray value range is greater than 45%, the processing device 140 may determine the degree of exposure as underexposure. If the pixel ratio of the first gray value range is within the value range [35%, 45%], the processing device 140 may determine the degree of exposure as overexposure. If the pixel ratio of the first gray value range is less than 35%, the processing device 140 may determine the degree of exposure as overexposure.

In 703, the processing device 140 (e.g., the current brightness determination module 404) may determine the current brightness of the target region based on the number of pixels corresponding to each gray value, the number of pixels falling in different gray value ranges, and a first predetermined threshold corresponding to the degree of exposure.

The first predetermined threshold may be a default value or an empirical value related to the image processing system 100. In some embodiments, the first predetermined threshold may be set according to a default setting of the image processing system 100. In some embodiments, the first predetermined threshold corresponding to the degree of exposure have different values when the degree of exposure is different. If the degree of exposure is underexposure or normal, the first predetermined threshold is a first value (e.g., 45%, 50%, 55%, etc.). If the degree of exposure is overexposure, the first predetermined threshold is a second value (e.g., 75%, 80%, 85%, etc.).

The processing device 140 determines the current brightness of the target region according to process 900.

In 901, the processing device 140 (e.g., the current brightness determination module 404) determines a gray value of the pixel whose pixel ratio satisfies a first preset condition as a target gray value. The pixel ratio of the target gray value is a ratio of the number of pixels corresponding to the target gray value to the total number of pixels in the target region. The first preset condition requires that the pixel ratios of the target gray value and one or more subsequent gray values are less than a third predetermined threshold. For example, the processing device 140 may determine the pixel ratios of the pixels having gray values 20-30, respectively. If the pixel ratios of the pixels having gray values 20-30 are all less than the third predetermined threshold, the processing device 140 may determine the gray value 20 as the target gray value.

In some embodiments, the third predetermined threshold may be a default value or an empirical value related to the image processing system 100. In some embodiments, the third predetermined threshold may be set according to a default setting of the image processing system 100. For example, the third predetermined threshold may be 1%, 1.5%, 2%, or the like.

In 903, the processing device 140 (e.g., the current brightness determination module 404) determines whether a pixel ratio of a second gray value range is greater than the first predetermined threshold based on the number of pixels in different gray value ranges. In some embodiments, the second gray value range may be determined based on the target gray value. Specifically, pixels in the second gray value range include one or more pixels whose gray value is less than or equal to the target gray value. For example, if the target gray value is 20, the second gray value range may be a gray value range of [0, 20]. The pixel ratio of the second gray value range may be a ratio of the number of pixels falling in the second gray value range to the total number of pixels in the target region. In some embodiments, the pixel ratio of the second gray value range may be 40%, 45%, 49%, 50%, 51%, 55%, or the like.

In response to a determination that the pixel ratio of the second gray value range is greater than the first predetermined threshold, the processing device 140 proceeds to operation 905. In 905, the processing device 140 determines the target gray value as the current brightness of the target region. For example, if the degree of exposure of the target region may be determined as underexposure, the first predetermined threshold may be 50%. As described in operation 901, the target gray value may be 20. The processing device 140 may determine the pixel ratio of the pixels having values in the second gray value range (i.e., the gray value range of [0, 20]). If the pixel ratio of the pixels having values in the second gray value range is determined as 51%, which is greater than 50%, the processing device 140 may determine the target gray value (i.e., gray value 20) as the current brightness of the target region.

Otherwise, in response to a determination that the pixel ratio of the second gray value range is less than or equal to the first predetermined threshold, the processing device 140 proceeds to operation 901. In 901, the processing device 140 re-determines the gray value of pixels whose pixel ratio satisfies the first preset condition as the target gray value. For example, if the pixel ratio of the pixels falling in the second gray value range is determined as 49%, which is less than 50%, the processing device 140 may proceed to operation 901. That is, the target gray value 20 is not the current brightness of the target region. In 901, the processing device 140 may determine whether the pixel ratio of pixels having gray value 21 satisfies the first preset condition. If the pixel ratio of pixels having gray value 21 satisfies the first preset condition, the processing device 140 may determine the gray value 21 as the target gray value, and proceed to operation 903. Otherwise, if the pixel ratio of the pixels having gray value 21 does not satisfy the first preset condition, the processing device 140 may continue to determine whether the pixel ratio of the pixel having subsequent gray value satisfies the first preset condition until the target gray value is determined.

It should be noted that the above description is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure. In some embodiments, one or more other optional operations (e.g., a storing operation) may be added elsewhere in the process 700. In the storing operation, the processing device 140 may store information and/or data (e.g., the pixel ratio of the first gray value range, the pixel ratio of the second gray value range, etc.) associated with the image processing system 100 in a storage device (e.g., the storage device 140) disclosed elsewhere in the present disclosure.

FIG. 10 is a flowchart illustrating an exemplary process for determining a current brightness of a target region according to some embodiments of the present disclosure. For illustration purpose only, the processing device 140 may be described as a subject to perform the process 1000. However, one of ordinary skill in the art would understand that the process 1000 may also be performed by other entities. For example, one of ordinary skill in the art would understand that at least a portion of the process 1000 may also be implemented on the computing device 200 as illustrated in FIG. 2 or the mobile device 300 as illustrated in FIG. 3. In some embodiments, one or more operations of process 1000 may be implemented in the image processing system 100 as illustrated in FIG. 1. In some embodiments, one or more operations in the process 1000 may be stored in the storage device 150 and/or the storage (e.g., the ROM 230, the RAM 240, etc.) in the form of instructions, and invoked and/or executed by the processing device 140 (e.g., the processor 220 of the processing device 140, or one or more modules of the processing device 140). In some embodiments, the instructions may be transmitted in the form of electronic current or electrical signals.

In 1001, the processing device 140 (e.g., the current brightness determination module 404) may identify an initial region including the target region from the image. In some embodiments, the initial region may be a rectangular box, a box along a 2D outline of an object (e.g., a human, a vehicle), a circular box, or any regular or irregular box. For example, the initial region may be a rectangular box including a human, a rectangular box including a vehicle, or the like. In some embodiments, the processing device 140 may identify the initial region using an object detection algorithm. The object detection algorithm may include a Regions with Convolutional Neural Network features (R-CNN) algorithm, a Fast R-CNN algorithm, a Faster R-CNN algorithm, a You Only Look Once (YOLO) algorithm, a Single Shot multibox Detector (SSD) algorithm, or the like, or any combination thereof.

In some embodiments, the processing device 140 may identify the initial region based on an object detection model (e.g., a human detection model, a vehicle detection model). For example, the processing device 140 may extract one or more features of each object, and assign a score for each object. If the score of an object exceeds a threshold, the processing device 140 may determine the object as an initial region. In some embodiments, the object detection model may be generated by pre-training a preliminary model based on a plurality of training samples. For example, in order to generate a human detection model, the processing device 140 may train the preliminary model using a plurality of images including humans. As another example, in order to generate a vehicle detection model, the processing device 140 may train the preliminary model using a plurality of images including vehicles. The preliminary model may include a Ranking Support Vector Machine (SVM) model, a Gradient Boosting Decision Tree (GBDT) model, an adaptive boosting model, a recurrent neural network model (e.g., a long short term memory (LSTM) neural network model, a hierarchical recurrent neural network model, a bi-direction recurrent neural network model, a second-order recurrent neural network model, a fully recurrent network model), a convolutional network model, a hidden Markov model, a perceptron neural network model, a Hopfield network model, a self-organizing map (SOM), or a learning vector quantization (LVQ), or the like, or any combination thereof.

In some embodiments, the processing device 140 may also determine a position of the initial region in the image. For example, the processing device 140 may determine coordinate information of the upper left corner and/or upper right corner of the initial region, or coordinate information of the center of the initial region.

In 1003, the processing device 140 (e.g., the current brightness determination module 404) may determine the target region by trimming the initial region according to a predetermined trimming strategy. For an initial region for an animal including a human, the target region may be a facial region. For an initial region for a vehicle, the target region may be a region including a license plate. The processing device 140 may trim the initial region to obtain the target region.

In some embodiments, the predetermined trimming strategy may be different for different initial regions. Merely by way of example, the initial region may be a rectangular box including a human. For a relatively long rectangular box (e.g., a rectangular box including a whole body), the processing device 140 may apply a three-step trimming strategy. Specifically, step one, the processing device 140 may trim the lower part of the rectangular box (e.g.,45%, 49%, 50%, 51%, 55%, etc. of the rectangular box). The trimmed rectangular box may include an upper part of the body. Step two, the processing device 140 may trim a portion of the upper part of the trimmed rectangular box (e.g., 10% of the rectangular box) and a portion of the lower part of the trimmed rectangular box (e.g., 30% of the rectangular box). Step three, the processing device 140 may symmetrically trim a portion of the left side and the right side of the trimmed rectangular box (e.g., 2% of the rectangular box). Then the target region (e.g., a facial region) may be determined. The aspect ratio of the target region may be 3:4. For a relatively short rectangular box (e.g., a rectangular box including an upper part of the body), the processing device 140 may apply a two-step trimming strategy. Specifically, step one may be omitted. The processing device 140 may determine the target region by trimming the initial region according to steps two and three. The aspect ratio of the target region may be 3:4. In some embodiments, if the initial region is a rectangular box including a lower part of the body (which not includes a face), the processing device 140 may remove the initial region.

In 1005, the processing device 140 (e.g., the current brightness determination module 404) may perform a downsampling on the target region. In some embodiments, in order to reduce the computing amount of determining the current brightness, the target region may be downsampled. For example, the facial region may be downsampled.

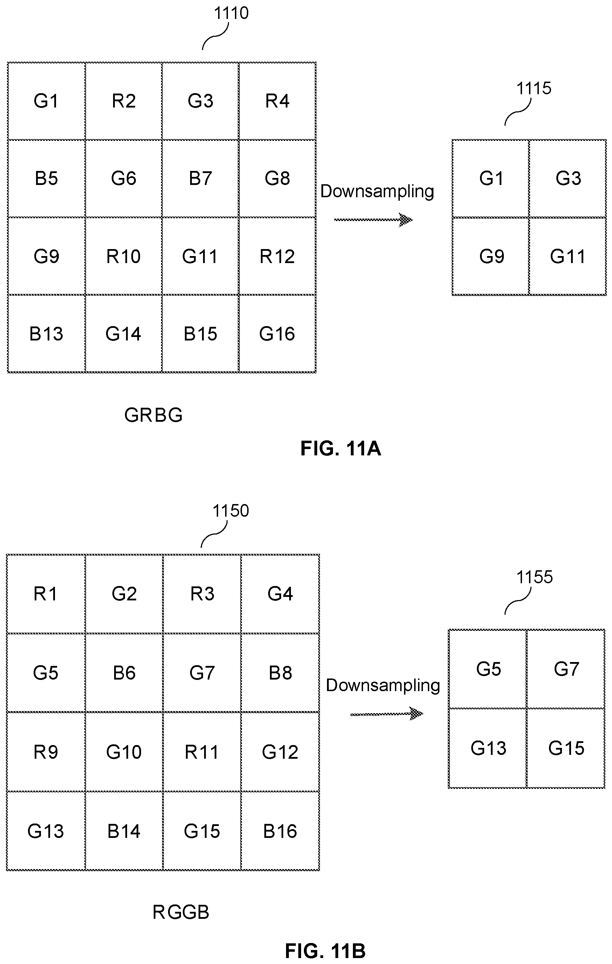

In some embodiments, the image may be a raw image in a Bayer format. The target region may be a part of the raw image in the Bayer format. The Bayer format may include a GRBG format, a RGGB format, or the like. As used herein, "G" refer to green, "R" refers to red, and "B" refers to blue. In some embodiments, the processing device 140 may perform a G-channel downsampling on the target region. Merely by way of example, FIGs. 11A and 11B are schematic diagrams illustrating a target region in a Bayer format. FIG. 11A shows a target region 1110 in a GRBG format. The processing device 140 may select a sub-region including 2*2 pixels on the target region 1110, and perform a G-channel downsampling on the sub-region. As shown in FIG. 11A, the sub-region including 2*2 pixels may be G1, R2, B5, and G6, and the downsampled pixel may be G1. The sub-region including 2*2 pixels may be G3, R4, B7, G8, and the downsampled pixel may be G3. The sub-region including 2*2 pixels may be G9, R10, B13, and G14, and the downsampled pixel may be G9. The sub-region including 2*2 pixels may be G11, R12, B15, and G16, and the downsampled pixel may be G11. The downsampled target region 1115 may include four pixels, e.g., G1, G3, G9, and G11. The image size of the downsampled target region 1115 may be a quarter of the target region 1110, thereby reducing the computing amount of determining the current brightness. In some embodiments, the processing device 140 may select a sub-region including 4*4 pixels, 8*8 pixels, etc. on the target region 1110, and perform a G-channel downsampling on the sub-region. In some embodiments, the processing device 140 may perform a R-channel downsampling on the target region 1110, or a B-channel downsampling on the target region 1110. For example, the processing device 140 may perform a R-channel downsampling on the target region 1110, and the downsampled target region may include four pixels, e.g., R2, R4, R10, R12. As another example, the processing device 140 may perform a B-channel downsampling on the target region 1110, and the downsampled target region may include four pixels, e.g., B5, B7, B13, B15.

FIG. 11B shows a target region 1150 in a RGGB format. The processing device 140 may select a sub-region including 2*2 pixels on the target region 1150, and perform a G-channel downsampling on the sub-region. As shown in FIG. 11B, the sub-region including 2*2 pixels may be R1, G2, G5, and B6, and the downsampled pixel may be G5. The sub-region including 2*2 pixels may be R3, G4, G7, and B8, and the downsampled pixel may be G7. The sub-region including 2*2 pixels may be R9, G10, G13, and B14, and the downsampled pixel may be G13. The sub-region including 2*2 pixels may be R11, G12, G15, and B16, and the downsampled pixel may be G15. The downsampled target region 1155 may include four pixels, e.g., G5, G7, G13, and G15. The image size of the downsampled target region 1155 may be a quarter of the target region 1150, thereby reducing the computing amount of determining the current brightness. In some embodiments, the processing device 140 may select a sub-region including 4*4 pixels, 8*8 pixels, etc. on the target region 1150, and perform a G-channel downsampling on the sub-region. In some embodiments, the processing device 140 may perform a R-channel downsampling on the target region 1150, or a B-channel downsampling on the target region 1150. For example, the processing device 140 may perform a R-channel downsampling on the target region 1150, and the downsampled target region may include four pixels, e.g., R1, R3, R9, R11. As another example, the processing device 140 may perfom a B-channel downsampling on the target region 1150, and the downsampled target region may include four pixels, e.g., B6, B8, B14, B16.

In some embodiments of the present disclosure, the initial region may be determined using an object detection model, and the target region may be obtained by trimming the initial region, which can effectively identify the target region under the backlighting condition, the reflective condition, or the like. In the present disclosure, the processing device 140 may perform the downsampling on the raw image (or the target region), thus saving the subsequent image signal processing (ISP) process and reducing the computing amount of determining the current brightness.

It should be noted that the above description regarding the process 1000 is merely provided for the purposes of illustration, and not intended to limit the scope of the present disclosure. For persons having ordinary skills in the art, multiple variations and modifications may be made under the teachings of the present disclosure. However, those variations and modifications do not depart from the scope of the present disclosure. In some embodiments, operation 1005 may be omitted. The processing device 140 may determine the current brightness of the target region based on the gray information of the (unsampled) target region. In some embodiments, operation 1005 may be performed before operation 1001. The processing device 140 may perform a downsampling on the image. The processing device 140 may then identify the initial region including the target region from the downsampled image.

FIG. 12 is a flowchart illustrating an exemplary process for determining a current brightness according to some embodiments of the present disclosure. For illustration purpose only, the processing device 140 may be described as a subject to perform the process 1200. However, one of ordinary skill in the art would understand that the process 1200 may also be performed by other entities. For example, one of ordinary skill in the art would understand that at least a portion of the process 1200 may also be implemented on the computing device 200 as illustrated in FIG. 2 or the mobile device 300 as illustrated in FIG. 3. In some embodiments, one or more operations of process 1200 may be implemented in the image processing system 100 as illustrated in FIG. 1. In some embodiments, one or more operations in the process 1200 may be stored in the storage device 150 and/or the storage (e.g., the ROM 230, the RAM 240, etc.) in the form of instructions, and invoked and/or executed by the processing device 140 (e.g., the processor 220 of the processing device 140, or one or more modules of the processing device 140). In some embodiments, the instructions may be transmitted in the form of electronic current or electrical signals.

In 1201, the processing device 140 (e.g., the current brightness determination module 404) may obtain a position of each of the plurality of target regions in the image.

In some embodiments, the position of each target region may be represented by a coordinate of the target region. For example, the processing device 140 may establish a two-dimensional (2D) coordinate system by taking the lower left corner of the image as the origin, or by taking a center of the image as the origin. The processing device 140 may then determine the coordinate of each target region in the 2D coordinate system. In some embodiments, the coordinate of a target region may refer to the coordinate of a center of the target region.

In 1203, the processing device 140 (e.g., the current brightness determination module 404) may determine a deviation distance between each target region and a center of the image based on the position of the target region.

In some embodiments, the processing device 140 may determine the deviation distance of a target region and the center of the image based on the coordinate of the target region. For example, the coordinate of a target region (specifically, the coordinate of the center of the target region) may be (30, 40). The coordinate of the center of the image may be (0, 0). The processing device 140 may determine the deviation distance between the target region and the center of the image as 50 according to the Pythagorean theorem.

In 1205, the processing device 140 (e.g., the current brightness determination module 404) may determine a weight for each target region based on the deviation distance of the target region.

In some embodiments, the processing device 140 may determine a mapping relationship between a plurality of deviation distances and weights. In some embodiments, the mapping relationship may be a negative correlation mapping relationship. The greater the deviation distance is, the smaller the weight is. The smaller the deviation distance is, the greater the weight is. The processing device 140 may determine a weight for each target region based on the deviation distance of the target region and the mapping relationship.

In 1207, the processing device 140 (e.g., the current brightness determination module 404) may determine a current brightness by performing a weighted average on the current brightness of each target region based on the weight of each target region.

In some embodiments, the current brightness of each target region may be determined according to operation 503 of the process 500, and the descriptions are not repeated herein. The processing device 140 may determine a weighted average of the current brightness of each target region as the current brightness.

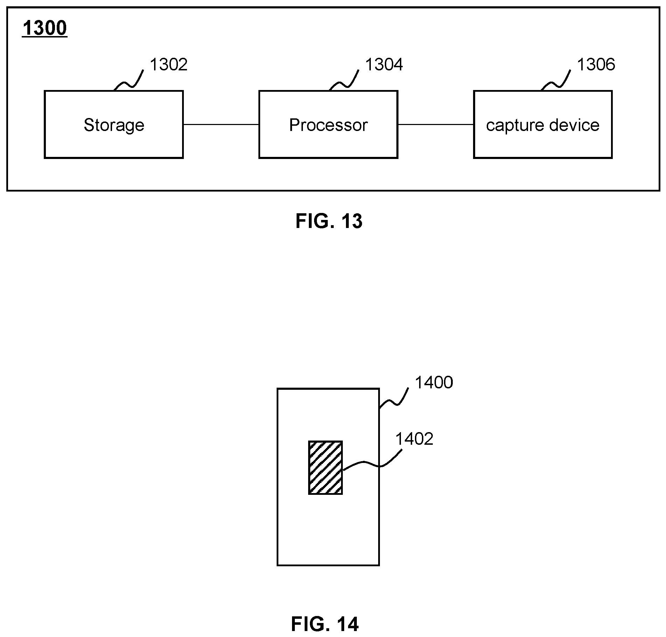

FIG. 13 is a schematic diagram illustrating an exemplary exposure parameter determination device according to some embodiments of the present disclosure. As shown in FIG. 13, the exposure parameter determination device 1300 may include a storage 1302, a processor 1304, and a capture device 1306. In some embodiments, the processor 1304 may communicate with the storage 1302. The processor 1304 may be used to execute a set of program instructions stored in the storage 1302 to implement one or more operations of the above processes (e.g., the processes 500-1000). In some embodiments, the storage 1302 may be a non-transitory storage medium, configured to store the set of program instructions. The capture device 1306 may be configured to capture an image. More descriptions regarding the capture device 1306 may be found elsewhere in the present disclosure (e.g., FIG. 1 and the relevant descriptions thereof).

The processor 1304 may include one or more central processing unit (CPU). The processor 1304 may be an integrated circuit chip with signal processing capabilities. The processor 1304 may also be a general-purpose processor, a digital signal processor (DSP), an application specific integrated circuit (ASIC), a field-programmable gate array (FPGA), a programmable logic device, a discrete gate, a transistor logic device, a discrete hardware component, or the like, or any combination thereof. In some embodiments, the general-purpose processor may be a microprocessor, a conventional processor, or the like. In some embodiments, the processor 1304 may be implemented by multiple circuit chips.

In some embodiments, the processor 1304 may be configured to obtain a target region within an image captured by a capture device (e.g., the capture device 1306). The processor 1304 may also be configured to determine a current brightness of the target region based on gray information of the target region. The processor 1304 may be configured to determine a target brightness of the target region based on the current brightness of the target region. The processor 1304 may be further configured to determine one or more exposure parameters of the capture device (e.g., the capture device 1306). More descriptions of the determination of the exposure parameter(s) may be found elsewhere in the present disclosure (e.g., FIG. 5 and the descriptions thereof).

In some embodiments, the processor 1304 may be configured to determine a number of pixels corresponding to each gray value and a number of pixels falling in different gray value ranges by performing statistics on gray values of pixels in the target region, and determine the current brightness of the target region based on the number of pixels corresponding to each gray value and the number of pixels falling in different gray value ranges.

In some embodiments, the processor 1304 may be configured to determine a degree of exposure based on the number of pixels in different gray value ranges. The processor 1304 may also be configured to determine the current brightness of the target region based on the number of pixels corresponding to each gray value, the number of pixels falling in different gray value ranges, and a first predetermined threshold corresponding to the degree of exposure.

In some embodiments, the processor 1304 may be configured to determine whether a pixel ratio of a first gray value range is greater than a second predetermined threshold based on the number of pixels falling in different gray value ranges. The pixel ratio of the first gray value range may be a ratio of the number of pixels falling in the first gray value range to a total number of pixels in the target region. In response to a determination that the pixel ratio is greater than the second predetermined threshold, the processor 1304 may determine the degree of exposure of the target region as underexposure. Alternatively, in response to a determination that the pixel ratio is less than or equal to the second predetermined threshold, the processor 1304 may determine the degree of exposure of the target region as overexposure.

In some embodiments, the processor 1304 may be configured to determine the gray value of the pixel whose pixel ratio satisfies a first preset condition as a target gray value. The pixel ratio of the target gray value may be a ratio of the number of pixels corresponding to the target gray value to a total number of pixels in the target region. The processor 1304 may also be configured to determine whether a pixel ratio of a second gray value range is greater than the first predetermined threshold based on the number of pixels falling in different gray value ranges. Pixels in the second gray value range may include one or more pixels whose gray value is less than or equal to the target gray value. In response to a determination that the pixel ratio of the second gray value range is greater than the first predetermined threshold, the processor 1304 may determine the target gray value as the current brightness of the target region. In some embodiments, the first preset condition may refer to pixel ratios of the target gray value and one or more subsequent gray values are less than a third predetermined threshold.

In some embodiments, the image may be a raw image. The processor 1304 may be configured to identify an initial region including the target region from the image using an object detection model. The processor 1304 may be also configured to determine the target region by trimming the initial region according a predetermined trimming strategy. The processor 1304 may further be configured to perform a downsampling on the target region. In some embodiments, the processor 1304 may perform a G-channel downsampling on the target region. The processor 1304 may determine the current brightness of the target region based on the gray information of the downsampled target region.

In some embodiments, the image may include a plurality of target regions. The processor 1304 may be configured to identify a target region with a largest size among the plurality of target regions, and designate a current brightness of the target region with the largest size as the current brightness. In some embodiments, the processor 1304 may be configured to obtain a position of each of the plurality of target regions in the image. The processor 1304 may also be configured to determine a deviation distance between each target region and a center of the image based on the position of the target region. The processor 1304 may be further configured to determine a weight for each target region based on the deviation distance of the target region, and determine the current brightness by performing a weighted average on the current brightness of each target region based on the weight of each target region.

In some embodiments, the processor 1304 may be configured to, if the current brightness of the target region is within a predetermined brightness range, determine the current brightness as the target brightness. If the current brightness of the target region is not within the predetermined brightness range, the processor 1304 may determine a target brightness based on the current brightness and a brightness mapping relationship. The brightness mapping relationship may be a correspondence between one or more target brightness values and one or more current brightness values. In some embodiments, if the current brightness of the target region is less than the minimum value of the predetermined brightness range, the processor 1304 may adjust the current brightness, e.g., increasing the current brightness, to obtain the target brightness. In some embodiments, if the current brightness of the target region is greater than the maximum value of the predetermined brightness range, the processor 1304 may adjust the current brightness, e.g., decreasing the current brightness, to obtain the target brightness.

FIG. 14 is a schematic diagram illustrating an exemplary storage device according to some embodiments of the present disclosure. The storage device 1400 may store a set of program instructions 1402 that can be executed by a processor (e.g., the processor 1304). The set of program instructions 1402 may be used to implement one or more operations of the above processes (e.g., the processes 500-1000).

Having thus described the basic concepts, it may be rather apparent to those skilled in the art after reading this detailed disclosure that the foregoing detailed disclosure is intended to be presented by way of example only and is not limiting. Various alterations, improvements, and modifications may occur and are intended to those skilled in the art, though not expressly stated herein. These alterations, improvements, and modifications are intended to be suggested by this disclosure, and are within the scope of the exemplary embodiments of this disclosure.

Moreover, certain terminology has been used to describe embodiments of the present disclosure. For example, the terms "one embodiment," "an embodiment," and/or "some embodiments" mean that a particular feature, structure or characteristic described in connection with the embodiment is included in at least one embodiment of the present disclosure. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the present disclosure.

Further, it will be appreciated by one skilled in the art, aspects of the present disclosure may be illustrated and described herein in any of a number of patentable classes or context including any new and useful process, machine, manufacture, or composition of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "unit," "module," or "system." Furthermore, aspects of the present disclosure may take the form of a computer program product embodied in one or more computer readable media having computer readable program code embodied thereon.

A computer readable signal medium may include a propagated data signal with computer readable program code embodied therein, for example, in baseband or as part of a carrier wave. Such a propagated signal may take any of a variety of forms, including electro-magnetic, optical, or the like, or any suitable combination thereof. A computer readable signal medium may be any computer readable medium that is not a computer readable storage medium and that may communicate, propagate, or transport a program for use by or in connection with an instruction execution system, apparatus, or device. Program code embodied on a computer readable signal medium may be transmitted using any appropriate medium, including wireless, wireline, optical fiber cable, RF, or the like, or any suitable combination of the foregoing.

Computer program code for carrying out operations for aspects of the present disclosure may be written in any combination of one or more programming languages, including an object oriented programming language such as Java, Scala, Smalltalk, Eiffel, JADE, Emerald, C++, C#, VB. NET, Python or the like, conventional procedural programming languages, such as the "C" programming language, Visual Basic, Fortran 2003, Perl, COBOL 2002, PHP, ABAP, dynamic programming languages such as Python, Ruby and Groovy, or other programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS).

Furthermore, the recited order of processing elements or sequences, or the use of numbers, letters, or other designations therefore, is not intended to limit the claimed processes and methods to any order except as may be specified in the claims. Although the above disclosure discusses through various examples what is currently considered to be a variety of useful embodiments of the disclosure, it is to be understood that such detail is solely for that purpose, and that the appended claims are not limited to the disclosed embodiments, but, on the contrary, are intended to cover modifications and equivalent arrangements that are within the scope of the disclosed embodiments. For example, although the implementation of various components described above may be embodied in a hardware device, it may also be implemented as a software only solution, e.g., an installation on an existing server or mobile device.

Similarly, it should be appreciated that in the foregoing description of embodiments of the present disclosure, various features are sometimes grouped together in a single embodiment, figure, or description thereof for the purpose of streamlining the disclosure aiding in the understanding of one or more of the various embodiments. This method of disclosure, however, is not to be interpreted as reflecting an intention that the claimed subject matter requires more features than are expressly recited in each claim. Rather, claimed subject matter may lie in less than all features of a single foregoing disclosed embodiment.

**Claims**

1. A method for adjusting one or more exposure parameters implemented on a computing device having at least one processor, at least one computer-readable storage medium, and a communication platform connected to a network, comprising:

   obtaining (501) a target region within an image captured by a capture device;
   determining (503), based on gray information of the target region, a current brightness of the target region;
   determining (505), based on the current brightness of the target region, a target brightness of the target region; and
   determining (507), based on the target brightness of the target region, one or more exposure parameters of the capture device, wherein the determining the current brightness of the target region based on the gray information of the target region includes:

   determining (601) a number of pixels corresponding to each gray value and a number of pixels falling in different gray value ranges by performing statistics on gray values of pixels in the target region, wherein the gray value ranges start at 0;
   determining (701) a degree of exposure based on the number of pixels falling in the different gray value ranges, wherein the degree of exposure includes underexposure, normal, overexposure;
   determining (901) a gray value of a pixel whose pixel ratio satisfies a first preset condition as a target gray value, wherein the pixel ratio of the target gray value is a ratio of the number of pixels corresponding to the target gray value to a total number of pixels in the target region, and the first preset condition requires that pixel ratios of the target gray value and one or more subsequent gray values are less than a third predetermined threshold;
   determining (903), based on the number of pixels falling in the different gray value ranges, whether a pixel ratio of a second gray value range is greater than a first predetermined threshold corresponding to the degree of exposure, wherein pixels in the second gray value range include one or more pixels whose gray value is less than or equal to the target gray value, if the degree of exposure is underexposure or normal, the first predetermined threshold is a first value, if the degree of exposure is overexposure, the first predetermined threshold is a second value, and the pixel ratio of the second gray value range is a ratio of a number of pixels falling in the second gray value range to the total number of pixels in the target region;
   in response to a determination that the pixel ratio of the second gray value range is greater than the first predetermined threshold, determining (905) the target gray value as the current brightness of the target region; and
   in response to determining that the pixel ratio of the second gray value range is less than or equal to the first predetermined threshold, determining as the target gray value a next gray value of the one or more subsequent gray values satisfying the first preset condition and again determining (903), based on the number of pixels falling in the different gray value ranges, whether the pixel ratio of the second gray value range is greater than the first predetermined threshold until the target gray value as the current brightness is determined.

2. The method of claim 1, wherein the obtaining the target region comprises:

   identifying (1001) an initial region including the target region from the image;
   determining (1003) the target region by trimming the initial region according to a predetermined trimming strategy.

3. The method of claim 2, wherein the initial region is a rectangular box including a human,

   for the rectangular box including a whole human body, the predetermined trimming strategy is a three-step trimming strategy;

for the rectangular box including an upper part of the body, the predetermined trimming strategy is a two-step trimming strategy; and

for the rectangular box including a lower part of the body, the predetermined trimming strategy is removing the initial region.

4. The method of claim 3, wherein the three-step trimming strategy includes:

trimming a lower part of the rectangular box, wherein a trimmed rectangular box includes the upper part of the body;

trimming a portion of an upper part of the trimmed rectangular box and a portion of a lower part of the trimmed rectangular box; and

symmetrically trimming a portion of a left side and a right side of the trimmed rectangular box to determine the target region.

5. The method of claim 3, wherein the two-step trimming strategy includes:

trimming a portion of an upper part of the rectangular box and a portion of a lower part of the rectangular box to obtain a trimmed rectangular box; and

symmetrically trimming a portion of a left side and a right side of the trimmed rectangular box to determine the target region.

6. The method of claim 2, wherein the initial region includes a rectangular box including an object, the object being a human or a vehicle, and the identifying (1001) an initial region including the target region from the image includes:

extracting one or more features of each object; assigning a score for each object; and

in response to the score of an object exceeding a threshold, determining a region of the image where the object is located as the initial region.

7. The method of claim 2, wherein the obtaining the target region further comprises:

selecting at least one sub-region within the target region; and

performing a G-channel downsampling on the at least one sub-region, the G-channel is a channel with green pixels of a raw image in a Bayer format.

8. The method of claim 1, wherein the determining the degree of exposure based on the number of pixels falling in the different gray value ranges comprises:

determining (801), based on the number of pixels falling in the different gray value ranges, whether a pixel ratio of a first gray value range is greater than a second predetermined threshold, wherein the pixel ratio of the first gray value range is a ratio of the number of pixels falling in the first gray value range to a total number of pixels in the target region;

in response to a determination that the pixel ratio is greater than the second predetermined threshold, determining (803) the degree of exposure of the target region as underexposure; or

in response to a determination that the pixel ratio is less than or equal to the second predetermined threshold, determining (805) the degree of exposure of the target region as overexposure.

9. The method of any one of claims 1-8, wherein the image is a raw image.

10. The method of any one of claims 1-9, wherein the image includes a plurality of target regions, and the determining the current brightness of the target region based on the gray information of the target region comprises:

identifying, among the plurality of target regions, a target region with a largest size; and

designating a current brightness of the target region with the largest size as the current brightness used for determining the target brightness.

11. The method of any one of claims 1-9, wherein the image includes a plurality of target regions, and the determining the current brightness of the target region based on the gray information of the target region comprises:

obtaining (1201) a position of each of the plurality of target regions in the image;

determining (1203) a deviation distance between each target region and a center of the image based on the position of the target region;

determining (1205) a weight for each target region based on the deviation distance of the target region; and

determining (1207) the current brightness used for determining the target brightness by performing a weighted

average on the current brightness of each target region based on the weight of each target region.

12. The method of any one of claims 1-11, wherein the determining the target brightness of the target region comprises:

if the current brightness of the target region is within a predetermined brightness range, determining the current brightness as the target brightness; or

if the current brightness of the target region is not within the predetermined brightness range, determining a target brightness based on the current brightness and a brightness mapping relationship, wherein the brightness mapping relationship is a correspondence between one or more target brightness values and one or more current brightness values.

13. A non-transitory computer-readable storage medium, comprising at least one set of instructions, wherein when executed by at least one processor of a computing device, the at least one set of instructions directs the at least one processor to perform acts of:

obtaining (501) a target region within an image captured by a capture device;

determining (503), based on gray information of the target region, a current brightness of the target region;

determining (505), based on the current brightness of the target region, a target brightness of the target region; and

determining (507), based on the target brightness of the target region, one or more exposure parameters of the capture device, wherein the determining the current brightness of the target region based on the gray information of the target region includes:

determining (601) a number of pixels corresponding to each gray value and a number of pixels falling in different gray value ranges by performing statistics on gray values of pixels in the target region, wherein the gray value ranges start at 0;

determining (701) a degree of exposure based on the number of pixels falling in the different gray value ranges, wherein the degree of exposure includes underexposure, normal, overexposure;

determining (901) a gray value of a pixel whose pixel ratio satisfies a first preset condition as a target gray value, wherein the pixel ratio of the target gray value is a ratio of the number of pixels corresponding to the target gray value to a total number of pixels in the target region, and the first preset condition requires that pixel ratios of the target gray value and one or more subsequent gray values are less than a third predetermined threshold;

determining (903), based on the number of pixels falling in the different gray value ranges, whether a pixel ratio of a second gray value range is greater than a first predetermined threshold corresponding to the degree of exposure, wherein pixels in the second gray value range include one or more pixels whose gray value is less than or equal to the target gray value, if the degree of exposure is underexposure or normal, the first predetermined threshold is a first value, if the degree of exposure is overexposure, the first predetermined threshold is a second value, and the pixel ratio of the second gray value range is a ratio of a number of pixels falling in the second gray value range to the total number of pixels in the target region;

in response to a determination that the pixel ratio of the second gray value range is greater than the first predetermined threshold, determining (905) the target gray value as the current brightness of the target region; and

in response to determining that the pixel ratio of the second gray value range is less than or equal to the first predetermined threshold, determining as the target gray value a next gray value of the one or more subsequent gray values satisfying the first preset condition and again determining (903), based on the number of pixels falling in the different gray value ranges, whether the pixel ratio of the second gray value range is greater than the first predetermined threshold until the target gray value as the current brightness is determined.

14. A system for adjusting one or more exposure parameters, comprising:

an obtaining module (402) configured to obtain a target region within an image captured by a capture device;

a current brightness determination module (404) configured to determine, based on gray information of the target region, a current brightness of the target region;

a target brightness determination module (406) configured to determine, based on the current brightness of the target region, a target brightness of the target region; and

an exposure parameter determination module (408) configured to determine, based on the target brightness of the target region, one or more exposure parameters of the capture device, to determine the current brightness of the target region based on the gray information of the target region, the current brightness determination module (404) is configured to:

determine a number of pixels corresponding to each gray value and a number of pixels falling in different gray value ranges by performing statistics on gray values of pixels in the target region, wherein the gray value ranges start at 0;

determine a degree of exposure based on the number of pixels falling in the different gray value ranges, wherein the degree of exposure includes underexposure, normal, overexposure;

determine a gray value of a pixel whose pixel ratio satisfies a first preset condition as a target gray value, wherein the pixel ratio of the target gray value is a ratio of the number of pixels corresponding to the target gray value to a total number of pixels in the target region, and the first preset condition requires that pixel ratios of the target gray value and one or more subsequent gray values are less than a third predetermined threshold;

determine, based on the number of pixels falling in the different gray value ranges, whether a pixel ratio of a second gray value range is greater than a first predetermined threshold corresponding to the degree of exposure, wherein pixels in the second gray value range include one or more pixels whose gray value is less than or equal to the target gray value, if the degree of exposure is underexposure or normal, the first predetermined threshold is a first value, if the degree of exposure is overexposure, the first predetermined threshold is a second value, and the pixel ratio of the second gray value range is a ratio of a number of pixels falling in the second gray value range to the total number of pixels in the target region;

in response to a determination that the pixel ratio of the second gray value range is greater than the first predetermined threshold, determine (905) the target gray value as the current brightness of the target region; and

in response to determining that the pixel ratio of the second gray value range is less than or equal to the first predetermined threshold, determining as the target gray value a next gray value of the one or more subsequent gray values satisfying the first preset condition and again determining (903), based on the number of pixels falling in the different gray value ranges, whether the pixel ratio of the second gray value range is greater than the first predetermined threshold until the target gray value as the current brightness is determined.

**Patentansprüche**

1. Verfahren zum Anpassen von einem oder mehreren Belichtungsparametern, das auf einer Computervorrichtung ausgeführt wird, die mindestens einen Prozessor, mindestens ein computerlesbares Speichermedium und eine mit einem Netzwerk verbundene Kommunikationsplattform aufweist, umfassend:

Erhalten (501) eines Zielbereichs innerhalb eines Bildes, das durch eine Aufnahmevorrichtung aufgenommen wurde;
Bestimmen (503) einer aktuellen Helligkeit des Zielbereichs auf der Grundlage von Graustufeninformationen des Zielbereichs;
Bestimmen (505) einer Zielhelligkeit des Zielbereichs auf der Grundlage der aktuellen Helligkeit des Zielbereichs; und
Bestimmen (507) von einem oder mehreren Belichtungsparametern der Aufnahmevorrichtung auf der Grundlage der Zielhelligkeit des Zielbereichs, wobei das Bestimmen der aktuellen Helligkeit des Zielbereichs auf der Grundlage der Graustufeninformationen des Zielbereichs einschließt:

Bestimmen (601) einer Anzahl von Pixeln, die jedem Grauwert entsprechen, und einer Anzahl von Pixeln, die in unterschiedlichen Grauwertbereichen liegen, durch Durchführen von Statistik auf den Grauwerten von Pixeln im Zielbereich, wobei die Grauwertbereiche bei 0 beginnen;
Bestimmen (701) eines Belichtungsgrades auf der Grundlage der Anzahl der Pixel, die in den unterschiedlichen Grauwertbereichen liegen, wobei der Belichtungsgrad Unterbelichtung, normale Belichtung und Überbelichtung einschließt;
Bestimmen (901) eines Grauwerts eines Pixels, dessen Pixelanteil eine erste voreingestellte Bedingung erfüllt, als einen Zielgrauwert, wobei der Pixelanteil des Zielgrauwerts ein Verhältnis der Anzahl der dem Zielgrauwert entsprechenden Pixel zur Gesamtanzahl der Pixel im Zielbereich ist und die erste voreingestellte Bedingung erfordert, dass Pixelanteile des Zielgrauwerts und eines oder mehrerer nachfolgender Grauwerte kleiner als ein dritter vorbestimmter Schwellenwert sind;
Bestimmen (903), auf der Grundlage der Anzahl der Pixel, die in den unterschiedlichen Grauwertbereichen liegen, ob ein Pixelanteil eines zweiten Grauwertbereichs größer ist als ein erster vorbestimmter Schwellenwert, der dem Belichtungsgrad entspricht, wobei Pixel im zweiten Grauwertbereich ein oder mehrere Pixel einschließen, deren Grauwert kleiner oder gleich dem Zielgrauwert ist, wobei, wenn der Belichtungsgrad Unterbelichtung oder normale Belichtung ist, der erste vorbestimmte Schwellenwert ein erster Wert ist, wobei, wenn der Belichtungsgrad Überbelichtung ist, der erste vorbestimmte Schwellenwert ein zweiter Wert ist, und der Pixelanteil des zweiten Grauwertbereichs ein Verhältnis der Anzahl der Pixel, die im zweiten Grauwertbereich liegen, zur Gesamtanzahl der Pixel im Zielbereich ist; als Antwort auf eine Bestimmung, dass der Pixelanteil des zweiten Grauwertbereichs größer als der erste vorbestimmte Schwellenwert ist, Bestimmen (905) des Zielgrauwerts als die aktuelle Helligkeit des Zielbereichs; und als Antwort auf Bestimmen, dass der Pixelanteil des zweiten Grauwertbereichs kleiner oder gleich dem ersten vorbestimmten Schwellenwert ist, Bestimmen eines nächsten Grauwerts aus dem einen oder den mehreren nachfolgenden Grauwerten, welche die erste voreingestellte Bedingung erfüllen, als Zielgrauwert und erneutes Bestimmen (903) auf der Grundlage der Anzahl der Pixel, die in den unterschiedlichen Grauwertbereichen liegen, ob der Pixelanteil des zweiten Grauwertbereichs größer als der erste vorbestimmte Schwellenwert ist, bis der Zielgrauwert als die aktuelle Helligkeit bestimmt ist.

2. Verfahren nach Anspruch 1, wobei das Erhalten des Zielbereichs umfasst:

   Identifizieren (1001) eines Anfangsbereichs, der den Zielbereich einschließt, aus dem Bild; Bestimmen (1003) des Zielbereichs durch Beschneiden des Anfangsbereichs gemäß einer vorbestimmten Beschneidestrategie.

3. Verfahren nach Anspruch 2, wobei der Anfangsbereich ein rechteckiger Rahmen ist, der einen Menschen einschließt,

   wobei, falls der rechteckige Rahmen einen gesamten menschlichen Körper einschließt, die vorbestimmte Beschneidestrategie eine dreistufige Beschneidestrategie ist; falls der rechteckige Rahmen einen oberen Teil des Körpers einschließt, die vorbestimmte Beschneidestrategie eine zweistufige Beschneidestrategie ist; und
falls der rechteckige Rahmen einen unteren Teil des Körpers einschließt, die vorbestimmte Beschneidestrategie das Entfernen des Anfangsbereichs ist.

4. Verfahren nach Anspruch 3, wobei die dreistufige Beschneidestrategie einschließt:

   Beschneiden eines unteren Teils des rechteckigen Rahmens, wobei ein beschnittener rechteckiger Rahmen den oberen Teil des Körpers einschließt; Beschneiden eines Abschnitts eines oberen Teils des beschnittenen rechteckigen Rahmens und eines Abschnitts eines unteren Teils des beschnittenen rechteckigen Rahmens; und symmetrisches Beschneiden eines Abschnitts einer linken Seite und einer rechten Seite des beschnittenen rechteckigen Rahmens, um den Zielbereich zu bestimmen.

5. Verfahren nach Anspruch 3, wobei die zweistufige Beschneidestrategie einschließt:

   Beschneiden eines Abschnitts eines oberen Abschnitts des rechteckigen Rahmens und eines Abschnitts eines unteren Abschnitts des rechteckigen Rahmens, um einen beschnittenen rechteckigen Rahmen zu erhalten; und symmetrisches Beschneiden eines Abschnitts einer linken Seite und einer rechten Seite des beschnittenen rechteckigen Rahmens, um den Zielbereich zu bestimmen.

6. Verfahren nach Anspruch 2, wobei der Anfangsbereich einen rechteckigen Rahmen einschließt, der ein Objekt einschließt, wobei das Objekt ein Mensch oder ein Fahrzeug ist, und das Identifizieren (1001) eines Anfangsbereichs, der den Zielbereich einschließt, aus dem Bild einschließt:

   Extrahieren von einem oder mehreren Merkmalen jedes Objekts; Zuweisen einer Punktzahl für jedes Objekt; und als Antwort darauf, dass die Punktzahl eines Objekts einen Schwellenwert überschreitet, Bestimmen eines Bereichs des Bildes, in dem sich das Objekt befindet, als den Anfangsbereich.

7. Verfahren nach Anspruch 2, wobei das Erhalten des Zielbereichs ferner umfasst:

   Auswählen mindestens eines Teilbereichs innerhalb des Zielbereichs; und Durchführen von G-Kanal-Downsampling auf dem mindestens einen Teilbereich, wobei der G-Kanal ein Kanal mit grünen Pixeln eines Rohbildes im Bayer-Format ist.

8.  Verfahren nach Anspruch 1, wobei das Bestimmen des Belichtungsgrades auf der Grundlage der Anzahl der Pixel, die in den unterschiedlichen Grauwertbereichen liegen, umfasst:

    Bestimmen (801) auf der Grundlage der Anzahl der Pixel, die in den unterschiedlichen Grauwertbereichen liegen, ob ein Pixelanteil eines ersten Grauwertbereichs größer ist als ein zweiter vorbestimmter Schwellenwert, wobei der Pixelanteil des ersten Grauwertbereichs ein Verhältnis der Anzahl der Pixel, die im ersten Grauwertbereich liegen, zur Gesamtanzahl von Pixeln im Zielbereich ist;
    als Antwort auf eine Bestimmung, dass der Pixelanteil größer als der zweite vorbestimmte Schwellenwert ist, Bestimmen (803) des Belichtungsgrades des Zielbereichs als Unterbelichtung; oder
    als Antwort auf eine Bestimmung, dass der Pixelanteil kleiner oder gleich dem zweiten vorbestimmten Schwellenwert ist, Bestimmen (805) des Belichtungsgrades des Zielbereichs als Überbelichtung.

9.  Verfahren nach einem der Ansprüche 1-8, wobei das Bild ein Rohbild ist.

10. Verfahren nach einem der Ansprüche 1-9, wobei das Bild eine Vielzahl von Zielbereichen einschließt und das Bestimmen der aktuellen Helligkeit des Zielbereichs auf der Grundlage der Graustufeninformationen des Zielbereichs umfasst:

    Identifizieren eines Zielbereichs mit einer größten Größe unter der Vielzahl von Zielbereichen; und
    Festlegen einer aktuellen Helligkeit des Zielbereichs mit der größten Größe als die aktuelle Helligkeit, die zum Bestimmen der Zielhelligkeit verwendet wird.

11. Verfahren nach einem der Ansprüche 1-9, wobei das Bild eine Vielzahl von Zielbereichen einschließt und das Bestimmen der aktuellen Helligkeit des Zielbereichs auf der Grundlage der Graustufeninformationen des Zielbereichs umfasst:

    Erhalten (1201) einer Position eines jeden der Vielzahl von Zielbereichen im Bild;
    Bestimmen (1203) eines Abweichungsabstands zwischen jedem Zielbereich und einem Mittelpunkt des Bildes auf der Grundlage der Position des Zielbereichs;
    Bestimmen (1205) eines Gewichts für jeden Zielbereich auf der Grundlage des Abweichungsabstands des Zielbereichs; und
Bestimmen (1207) der aktuellen Helligkeit, die zum Bestimmen der Zielhelligkeit verwendet wird, durch Durchführen eines gewichteten Mittels auf der aktuellen Helligkeit jedes Zielbereichs auf der Grundlage des Gewichts jedes Zielbereichs.

12. Verfahren nach einem der Ansprüche 1-11, wobei das Bestimmen der Zielhelligkeit des Zielbereichs umfasst:

    wenn die aktuelle Helligkeit des Zielbereichs innerhalb eines vorbestimmten Helligkeitsbereichs liegt, Bestimmen der aktuellen Helligkeit als die Zielhelligkeit; oder
    wenn die aktuelle Helligkeit des Zielbereichs nicht innerhalb des vorbestimmten Helligkeitsbereichs liegt, Bestimmen einer Zielhelligkeit auf der Grundlage der aktuellen Helligkeit und einer Helligkeitszuordnungsbeziehung, wobei die Helligkeitszuordnungsbeziehung eine Übereinstimmung zwischen einem oder mehreren Zielhelligkeitswerten und einem oder mehreren aktuellen Helligkeitswerten ist.

13. Nichtflüchtiges computerlesbares Speichermedium, umfassend mindestens eine Menge von Anweisungen, wobei die mindestens eine Menge von Anweisungen, wenn sie durch mindestens einen Prozessor einer Computervorrichtung ausgeführt wird, den mindestens einen Prozessor anweist, folgende Handlungen durchzuführen:

    Erhalten (501) eines Zielbereichs innerhalb eines Bildes, das durch eine Aufnahmevorrichtung aufgenommen wurde;
    Bestimmen (503) einer aktuellen Helligkeit des Zielbereichs auf der Grundlage von Graustufeninformationen des Zielbereichs;
    Bestimmen (505) einer Zielhelligkeit des Zielbereichs auf der Grundlage der aktuellen Helligkeit des Zielbereichs; und
    Bestimmen (507) von einem oder mehreren Belichtungsparametern der Aufnahmevorrichtung auf der Grundlage der Zielhelligkeit des Zielbereichs, wobei das Bestimmen der aktuellen Helligkeit des Zielbereichs auf der Grundlage der Graustufeninformationen des Zielbereichs einschließt:

        Bestimmen (601) einer Anzahl von Pixeln, die jedem Grauwert entsprechen, und einer Anzahl von Pixeln, die in unterschiedlichen Grauwertbereichen liegen, durch Durchführen von Statistik auf den Grauwerten von Pixeln im Zielbereich, wobei die Grauwertbereiche bei 0 beginnen;

Bestimmen (701) eines Belichtungsgrades auf der Grundlage der Anzahl der Pixel, die in den unterschiedlichen Grauwertbereichen liegen, wobei der Belichtungsgrad Unterbelichtung, normale Belichtung und Überbelichtung einschließt;

Bestimmen (901) eines Grauwerts eines Pixels, dessen Pixelanteil eine erste voreingestellte Bedingung erfüllt, als einen Zielgrauwert, wobei der Pixelanteil des Zielgrauwerts ein Verhältnis der Anzahl der dem Zielgrauwert entsprechenden Pixel zur Gesamtanzahl der Pixel im Zielbereich ist und die erste voreingestellte Bedingung erfordert, dass Pixelanteile des Zielgrauwerts und eines oder mehrerer nachfolgender Grauwerte kleiner als ein dritter vorbestimmter Schwellenwert sind;

Bestimmen (903), auf der Grundlage der Anzahl der Pixel, die in den unterschiedlichen Grauwertbereichen liegen, ob ein Pixelanteil eines zweiten Grauwertbereichs größer ist als ein erster vorbestimmter Schwellenwert, der dem Belichtungsgrad entspricht, wobei Pixel im zweiten Grauwertbereich ein oder mehrere Pixel einschließen, deren Grauwert kleiner oder gleich dem Zielgrauwert ist, wobei, wenn der Belichtungsgrad Unterbelichtung oder normale Belichtung ist, der erste vorbestimmte Schwellenwert ein erster Wert ist, wobei, wenn der Belichtungsgrad Überbelichtung ist, der erste vorbestimmte Schwellenwert ein zweiter Wert ist, und der Pixelanteil des zweiten Grauwertbereichs ein Verhältnis der Anzahl der Pixel, die im zweiten Grauwertbereich liegen, zur Gesamtanzahl der Pixel im Zielbereich ist;

als Antwort auf eine Bestimmung, dass der Pixelanteil des zweiten Grauwertbereichs größer als der erste vorbestimmte Schwellenwert ist, Bestimmen (905) des Zielgrauwerts als die aktuelle Helligkeit des Zielbereichs; und

als Antwort auf Bestimmen, dass der Pixelanteil des zweiten Grauwertbereichs kleiner oder gleich dem ersten vorbestimmten Schwellenwert ist, Bestimmen eines nächsten Grauwerts aus dem einen oder den mehreren nachfolgenden Grauwerten, welche die erste voreingestellte Bedingung erfüllen, als Zielgrauwert und erneutes Bestimmen (903) auf der Grundlage der Anzahl der Pixel, die in den unterschiedlichen Grauwertbereichen liegen, ob der Pixelanteil des zweiten Grauwertbereichs größer als der erste vorbestimmte Schwellenwert ist, bis der Zielgrauwert als die aktuelle Helligkeit bestimmt ist.

14. System zum Anpassen von einem oder mehreren Belichtungsparametern, umfassend:

ein Erfassungsmodul (402), das dafür konfiguriert ist, einen Zielbereich innerhalb eines Bildes, das durch eine Erfassungsvorrichtung aufgenommen wurde, zu erhalten;

ein Modul zur Bestimmung der aktuellen Helligkeit (404), das dafür konfiguriert ist, auf der Grundlage von Graustufeninformationen des Zielbereichs eine aktuelle Helligkeit des Zielbereichs zu bestimmen;

ein Modul zur Bestimmung der Zielhelligkeit (406), das dafür konfiguriert ist, auf der Grundlage der aktuellen Helligkeit des Zielbereichs eine Zielhelligkeit des Zielbereichs zu bestimmen; und

ein Belichtungsparameter-Bestimmungsmodul (408), das dafür konfiguriert ist, auf der Grundlage der Zielhelligkeit des Zielbereichs einen oder mehrere Belichtungsparameter der Aufnahmevorrichtung zu bestimmen, wobei, um die aktuelle Helligkeit des Zielbereichs auf der Grundlage der Graustufeninformationen des Zielbereichs zu bestimmen, das Modul zur Bestimmung der aktuellen Helligkeit (404) dafür konfiguriert ist:

eine Anzahl von Pixeln, die jedem Grauwert entsprechen, und eine Anzahl von Pixeln, die in unterschiedlichen Grauwertbereichen liegen, durch Durchführung von Statistik auf Grauwerten von Pixeln im Zielbereich zu bestimmen, wobei die Grauwertbereiche bei 0 beginnen;

einen Belichtungsgrad auf der Grundlage der Anzahl der Pixel, die in den unterschiedlichen Grauwertbereichen liegen, zu bestimmen, wobei der Belichtungsgrad Unterbelichtung, normale Belichtung und Überbelichtung einschließt;

einen Grauwert eines Pixels, dessen Pixelanteil eine erste voreingestellte Bedingung erfüllt, als einen Zielgrauwert zu bestimmen, wobei der Pixelanteil des Zielgrauwerts ein Verhältnis der Anzahl der dem Zielgrauwert entsprechenden Pixel zur Gesamtanzahl der Pixel im Zielbereich ist und die erste voreingestellte Bedingung erfordert, dass die Pixelanteile des Zielgrauwerts und eines oder mehrerer nachfolgender Grauwerte kleiner als ein dritter vorbestimmter Schwellenwert sind;

auf der Grundlage der Anzahl der Pixel, die in den unterschiedlichen Grauwertbereichen liegen, zu bestimmen, ob ein Pixelanteil eines zweiten Grauwertbereichs größer ist als ein erster vorbestimmter Schwellenwert, der dem Belichtungsgrad entspricht, wobei Pixel im zweiten Grauwertbereich ein oder mehrere Pixel einschließen, deren Grauwert kleiner oder gleich dem Zielgrauwert ist, wobei, wenn der Belichtungsgrad Unterbelichtung oder normale Belichtung ist, der erste vorbestimmte Schwellenwert ein erster Wert ist, wobei, wenn der Belichtungsgrad Überbelichtung ist, der erste vorbestimmte Schwellenwert ein zweiter Wert ist, und der Pixelanteil des zweiten Grauwertbereichs ein Verhältnis der Anzahl der Pixel, die im zweiten Grauwertbereich liegen, zur Gesamtanzahl der Pixel im Zielbereich ist;

als Antwort auf eine Bestimmung, dass der Pixelanteil des zweiten Grauwertbereichs größer als der erste vorbestimmte Schwellenwert ist, den Zielgrauwert als die aktuelle Helligkeit des Zielbereichs bestimmen (905); und

als Antwort auf Bestimmen, dass der Pixelanteil des zweiten Grauwertbereichs kleiner oder gleich dem ersten vorbestimmten Schwellenwert ist, Bestimmen eines nächsten Grauwerts aus dem einen oder den mehreren nachfolgenden Grauwerten, welche die erste voreingestellte Bedingung erfüllen, als Zielgrauwert und erneutes Bestimmen (903) auf der Grundlage der Anzahl der Pixel, die in den unterschiedlichen Grauwertbereichen liegen, ob der Pixelanteil des zweiten Grauwertbereichs größer als der erste vorbestimmte Schwellenwert ist, bis der Zielgrauwert als die aktuelle Helligkeit bestimmt ist.

## Revendications

1. Procédé permettant d'ajuster un ou plusieurs paramètres d'exposition mis en œuvre sur un dispositif informatique présentant au moins un processeur, au moins un support de stockage lisible par ordinateur et une plateforme de communication connectée à un réseau, comprenant les étapes consistant à :

obtenir (501) une région cible dans une image capturée par un dispositif de capture ;
déterminer (503), sur la base des informations de gris de la région cible, une luminosité actuelle de la région cible ;
déterminer (505), sur la base de la luminosité actuelle de la région cible, une luminosité cible de la région cible ; et
déterminer (507), sur la base de la luminosité cible de la région cible, un ou plusieurs paramètres d'exposition du dispositif de capture, dans lequel la détermination de la luminosité actuelle de la région cible sur la base des informations de gris de la région cible inclut les étapes consistant à :

déterminer (601) un nombre de pixels correspondant à chaque valeur de gris et un nombre de pixels appartenant à différentes plages de valeurs de gris en effectuant des statistiques sur les valeurs de gris des pixels de la région cible, dans lequel les plages de valeurs de gris commencent à 0 ;
déterminer (701) un degré d'exposition sur la base du nombre de pixels appartenant aux différentes plages de valeurs de gris, dans lequel le degré d'exposition inclut la sous-exposition, la normale, la surexposition ;
déterminer (901) une valeur de gris d'un pixel dont le rapport de pixels satisfait une première condition prédéfinie en tant que valeur de gris cible, dans lequel le rapport de pixels de la valeur de gris cible est un rapport du nombre de pixels correspondant à la valeur de gris cible au nombre total de pixels dans la région cible, et la première condition prédéfinie exige que les rapports de pixels de la valeur de gris cible et d'une ou plusieurs valeurs de gris prochaines soient inférieurs à un troisième seuil prédéterminé ;
déterminer (903), sur la base du nombre de pixels appartenant aux différentes plages de valeurs de gris, si le rapport de pixels d'une seconde plage de valeurs de gris est supérieur à un premier seuil prédéterminé correspondant au degré d'exposition, dans lequel les pixels de la seconde plage de valeurs de gris incluent un ou plusieurs pixels dont la valeur de gris est inférieure ou égale à la valeur de gris cible, si le degré d'exposition est une sous-exposition ou normal, le premier seuil prédéterminé est une première valeur, si le degré d'exposition est une surexposition, le premier seuil prédéterminé est une seconde valeur, et le rapport de pixels de la seconde plage de valeurs de gris est un rapport entre le nombre de pixels appartenant à la seconde plage de valeurs de gris et le nombre total de pixels dans la région cible ;
en réponse à la détermination que le rapport de pixels de la seconde plage de valeurs de gris est supérieur au premier seuil prédéterminé, déterminer (905) la valeur de gris cible comme étant la luminosité actuelle de la région cible ; et

en réponse à la détermination que le rapport de pixels de la seconde plage de valeurs de gris est inférieur ou égal au premier seuil prédéterminé, déterminer comme valeur de gris cible une valeur de gris suivante parmi une ou plusieurs valeurs de gris prochaines satisfaisant la première condition prédéfinie et déterminer à nouveau (903), sur la base du nombre de pixels appartenant aux différentes plages de valeurs de gris, si le rapport de pixels de la seconde plage de valeurs de gris est supérieur au premier seuil prédéterminé jusqu'à ce que la valeur de gris cible soit déterminée comme étant la luminosité actuelle.

2. Procédé selon la revendication 1, dans lequel l'obtention de la région cible comprend les étapes consistant à :

identifier (1001) une région initiale incluant la région cible à partir de l'image ;
déterminer (1003) la région cible en découpant la région initiale selon une stratégie de découpage prédéterminée.

3. Procédé selon la revendication 2, dans lequel la région initiale est une boîte rectangulaire incluant un être humain,

pour la boîte rectangulaire incluant un corps humain entier, la stratégie de découpage prédéterminée est une stratégie de découpage en trois étapes ;
pour la boîte rectangulaire incluant une partie supérieure du corps, la stratégie de découpage prédéterminée est une stratégie de découpage en deux étapes ; et
pour la boîte rectangulaire incluant une partie inférieure du corps, la stratégie de découpage prédéterminée consiste à supprimer la région initiale.

4. Procédé selon la revendication 3, dans lequel la stratégie de découpage en trois étapes inclut les étapes consistant à :

découper une partie inférieure de la boîte rectangulaire, dans lequel une boîte rectangulaire découpée inclut la partie supérieure du corps ;
découper une portion de la partie supérieure de la boîte rectangulaire découpée et une portion de la partie inférieure de la boîte rectangulaire découpée ; et
découper symétriquement une portion du côté gauche et du côté droit de la boîte rectangulaire découpée afin de déterminer la région cible.

5. Procédé selon la revendication 3, dans lequel la stratégie de découpage en deux étapes inclut les étapes consistant à :

découper une portion de la partie supérieure de la boîte rectangulaire et une portion de la partie inférieure de la boîte rectangulaire pour obtenir une boîte rectangulaire découpée ; et
découper symétriquement une portion du côté gauche et du côté droit de la boîte rectangulaire découpée afin de déterminer la région cible.

6. Procédé selon la revendication 2, dans lequel la région initiale inclut un rectangle inclut un objet, l'objet étant un être humain ou un véhicule, et l'identification (1001) d'une région initiale incluant la région cible à partir de l'image inclut les étapes consistant à :

extraire une ou plusieurs caractéristiques de chaque objet ;
attribuer un score à chaque objet ; et
en réponse au score d'un objet dépassant un seuil, déterminer une région de l'image où se trouve l'objet comme étant la région initiale.

7. Procédé selon la revendication 2, dans lequel l'obtention de la région cible comprend en outre les étapes consistant à :

sélectionner au moins une sous-région à l'intérieur de la région cible ; et
effectuer un sous-échantillonnage de canal G sur la au moins une sous-région, le canal G est un canal avec des pixels verts d'une image brute au format Bayer.

8. Procédé selon la revendication 1, dans lequel la détermination du degré d'exposition sur la base du nombre de pixels appartenant aux différentes plages de valeurs de gris comprend les étapes consistant à :

déterminer (801), sur la base du nombre de pixels appartenant aux différentes plages de valeurs de gris, si un rapport de pixels d'une première plage de valeurs de gris est supérieur à un deuxième seuil prédéterminé, dans lequel le rapport de pixels de la première plage de valeurs de gris est un rapport du nombre de pixels appartenant à la première plage de valeurs de gris au nombre total de pixels dans la région cible ;
en réponse à la constatation que le rapport de pixels est supérieur au deuxième seuil prédéterminé, déterminer (803) le degré d'exposition de la région cible pour une sous-exposition ; ou
en réponse à une détermination que le rapport de pixels est inférieur ou égal au deuxième seuil prédéterminé, déterminer (805) le degré d'exposition de la région cible pour une surexposition.

9. Procédé selon l'une quelconque des revendications 1-8, dans lequel l'image est une image brute.

10. Procédé selon l'une quelconque des revendications 1-9, dans lequel l'image inclut une pluralité de régions cibles, et la détermination de la luminosité actuelle de la région cible sur la base des informations de gris de la région cible comprend les étapes consistant à :

identifier, parmi la pluralité de régions cibles, une région cible de la plus grande taille ; et désigner la luminosité actuelle de la région cible de la plus grande taille comme luminosité actuelle utilisée pour déterminer la luminosité cible.

11. Procédé selon l'une quelconque des revendications 1-9, dans lequel l'image inclut une pluralité de régions cibles, et la détermination de la luminosité actuelle de la région cible sur la base des informations de gris de la région cible comprend les étapes consistant à :

obtenir (1201) une position de chacune de la pluralité de régions cibles dans l'image ; déterminer (1203) une distance d'écart entre chaque région cible et un centre de l'image sur la base de la position de la région cible ; déterminer (1205) un poids pour chaque région cible sur la base de la distance d'écart de la région cible ; et déterminer (1207) la luminosité actuelle utilisée pour déterminer la luminosité cible en effectuant une moyenne pondérée sur la luminosité actuelle de chaque région cible sur la base du poids de chaque région cible.

12. Procédé selon l'une quelconque des revendications 1-11, dans lequel la détermination de la luminosité cible de la région cible comprend les étapes consistant à :

si la luminosité actuelle de la région cible se situe dans une plage de luminosité prédéterminée, déterminer la luminosité actuelle comme étant la luminosité cible ; ou si la luminosité actuelle de la région cible ne se situe pas dans la plage de luminosité prédéterminée, déterminer une luminosité cible sur la base de la luminosité actuelle et d'une relation de mappage de luminosité, dans lequel la relation de mappage de luminosité est une correspondance entre une ou plusieurs valeurs de luminosité cible et une ou plusieurs valeurs de luminosité actuelle.

13. Support de stockage non transitoire lisible par ordinateur, comprenant au moins un ensemble d'instructions, dans lequel lorsqu'il est exécuté par au moins un processeur d'un dispositif informatique, le au moins un ensemble d'instructions ordonne à l'au moins un processeur d'effectuer les actes suivants consistant à :

obtenir (501) une région cible dans une image capturée par un dispositif de capture ; déterminer (503), sur la base des informations de gris de la région cible, une luminosité actuelle de la région cible ; déterminer (505), sur la base de la luminosité actuelle de la région cible, une luminosité cible de la région cible ; et déterminer (507), sur la base de la luminosité cible de la région cible, un ou plusieurs paramètres d'exposition du dispositif de capture, dans lequel la détermination de la luminosité actuelle de la région cible sur la base des informations de gris de la région cible inclut les étapes consistant à :

déterminer (601) un nombre de pixels correspondant à chaque valeur de gris et un nombre de pixels appartenant à différentes plages de valeurs de gris en effectuant des statistiques sur les valeurs de gris des pixels de la région cible, dans lequel les plages de valeurs de gris commencent à 0 ; déterminer (701) un degré d'exposition sur la base du nombre de pixels appartenant aux différentes plages de valeurs de gris, dans lequel le degré d'exposition inclut la sous-exposition, la normale, la surexposition ; déterminer (901) une valeur de gris d'un pixel dont le rapport de pixels satisfait une première condition prédéfinie en tant que valeur de gris cible, dans lequel le rapport de pixels de la valeur de gris cible est un rapport du nombre de pixels correspondant à la valeur de gris cible au nombre total de pixels dans la région cible, et la première condition prédéfinie exige que les rapports de pixels de la valeur de gris cible et d'une ou plusieurs valeurs de gris prochaines soient inférieurs à un troisième seuil prédéterminé ; déterminer (903), sur la base du nombre de pixels appartenant aux différentes plages de valeurs de gris, si le rapport de pixels d'une seconde plage de valeurs de gris est supérieur à un premier seuil prédéterminé correspondant au degré d'exposition, dans lequel les pixels de la seconde plage de valeurs de gris incluent un ou plusieurs pixels dont la valeur de gris est inférieure ou égale à la valeur de gris cible, si le degré d'exposition est une sous-exposition ou normal, le premier seuil prédéterminé est une première valeur, si le degré d'exposition est une surexposition, le premier seuil prédéterminé est une seconde valeur, et le rapport de pixels de la seconde plage de valeurs de gris est un rapport entre le nombre de pixels appartenant à la seconde plage de valeurs de gris et le nombre total de pixels dans la région cible ;

en réponse à la détermination que le rapport de pixels de la seconde plage de valeurs de gris est supérieur au premier seuil prédéterminé, déterminer (905) la valeur de gris cible comme étant la luminosité actuelle de la région cible ; et

en réponse à la détermination que le rapport de pixels de la seconde plage de valeurs de gris est inférieur ou égal au premier seuil prédéterminé, déterminer comme valeur de gris cible une valeur de gris suivante parmi une ou plusieurs valeurs de gris prochaines satisfaisant la première condition prédéfinie et déterminer à nouveau (903), sur la base du nombre de pixels appartenant aux différentes plages de valeurs de gris, si le rapport de pixels de la seconde plage de valeurs de gris est supérieur au premier seuil prédéterminé jusqu'à ce que la valeur de gris cible soit déterminée comme étant la luminosité actuelle.

14. Système d'ajustement d'un ou plusieurs paramètres d'exposition, comprenant :

un module d'obtention (402) configuré pour obtenir une région cible dans une image capturée par un dispositif de capture ;

un module de détermination de luminosité actuelle (404) configuré pour déterminer, sur la base des informations de gris de la région cible, une luminosité actuelle de la région cible ;

un module de détermination de la luminosité cible (406) configuré pour déterminer, sur la base de la luminosité actuelle de la région cible, une luminosité cible de la région cible ; et

un module de détermination de paramètres d'exposition (408) configuré pour déterminer, sur la base de la luminosité cible de la région cible, un ou plusieurs paramètres d'exposition du dispositif de capture, pour déterminer la luminosité actuelle de la région cible sur la base des informations de gris de la région cible, le module de détermination de luminosité actuelle (404) est configuré pour :

déterminer un nombre de pixels correspondant à chaque valeur de gris et un nombre de pixels appartenant à différentes plages de valeurs de gris en effectuant des statistiques sur les valeurs de gris des pixels de la région cible, dans lequel les plages de valeurs de gris commencent à 0 ;

déterminer un degré d'exposition sur la base du nombre de pixels appartenant aux différentes plages de valeurs de gris, dans lequel le degré d'exposition inclut la sous-exposition, la normale, la surexposition ;

déterminer une valeur de gris d'un pixel dont le rapport de pixels satisfait une première condition prédéfinie en tant que valeur de gris cible, dans lequel le rapport de pixels de la valeur de gris cible est un rapport du nombre de pixels correspondant à la valeur de gris cible au nombre total de pixels dans la région cible, et la première condition prédéfinie exige que les rapports de pixels de la valeur de gris cible et d'une ou plusieurs valeurs de gris prochaines soient inférieurs à un troisième seuil prédéterminé ;

déterminer, sur la base du nombre de pixels appartenant aux différentes plages de valeurs de gris, si le rapport de pixels d'une seconde plage de valeurs de gris est supérieur à un premier seuil prédéterminé correspondant au degré d'exposition, dans lequel les pixels de la seconde plage de valeurs de gris incluent un ou plusieurs pixels dont la valeur de gris est inférieure ou égale à la valeur de gris cible, si le degré d'exposition est une sous-exposition ou normal, le premier seuil prédéterminé est une première valeur, si le degré d'exposition est une surexposition, le premier seuil prédéterminé est une seconde valeur, et le rapport de pixels de la seconde plage de valeurs de gris est un rapport entre le nombre de pixels appartenant à la seconde plage de valeurs de gris et le nombre total de pixels dans la région cible ;

en réponse à la détermination que le rapport de pixels de la seconde plage de valeurs de gris est supérieur au premier seuil prédéterminé, déterminer (905) la valeur de gris cible comme étant la luminosité actuelle de la région cible ; et

en réponse à la détermination que le rapport de pixels de la seconde plage de valeurs de gris est inférieur ou égal au premier seuil prédéterminé, déterminer comme valeur de gris cible une valeur de gris suivante parmi une ou plusieurs valeurs de gris prochaines satisfaisant la première condition prédéfinie et déterminer à nouveau (903), sur la base du nombre de pixels appartenant aux différentes plages de valeurs de gris, si le rapport de pixels de la seconde plage de valeurs de gris est supérieur au premier seuil prédéterminé jusqu'à ce que la valeur de gris cible soit déterminée comme étant la luminosité actuelle.

**100**

110

150

Storage
Device

120

Network

140

130

130-1  130-2  130-3

**FIG. 1**

**200**

FIG. 2

**300**

320

Display

310

Communication
Platform

360

OS

370

App(s)

380

Memory

330

GPU

340

CPU

390

Storage

350

I/O

**FIG. 3**

**140**

Obtaining Module — 402

Current Brightness Determination Module — 404

Target Brightness Determination Module — 406

Exposure Parameter Determination Module — 408

**FIG. 4**

**500**

Obtaining a target region within an image captured by a capture device — 501

Determining a current brightness of the target region based on gray information of the target region — 503

Determining a target brightness of the target region based on the current brightness of the target region — 505

Determining one or more exposure parameters of the capture device based on the target brightness of the target region — 507

**FIG. 5**

**600**

Determining a number of pixels corresponding to each gray value and a number of pixels falling in different gray value ranges by performing statistics on gray values of pixels in the target region
601

Determining the current brightness of the target region based on the number of pixels corresponding to each gray value and the number of pixels falling in different gray value ranges
603

**FIG. 6**

**700**

Determining a degree of exposure based on the number of pixels falling in different gray value ranges
701

Determining the current brightness of the target region based on the number of pixels corresponding to each gray value, the number of pixels falling in different gray value ranges, and a first predetermined threshold corresponding to the degree of exposure
703

**FIG. 7**

<u>800</u>

N

A pixel ratio
of a first gray value range is greater than a second
predetermined threshold?                                    801

Y

Determining the degree of exposure of the target region as
underexposure                                              803

Determining the degree of exposure of the target region as
overexposure                                              805

FIG. 8

900

Determining a gray value of the pixel whose pixel ratio satisfies a first preset condition as a target value — 901

A pixel ratio of a second gray value range is greater than a first predetermined threshold? — 903

N

Y

Determining the target gray value as the current brightness of the target region — 905

FIG. 9

**1000**

Identifying an initial region including the target region from the image — 1001

Determining the target region by trimming the initial region according to a predetermined trimming strategy — 1003

Performing a downsampling on the target region — 1005

**FIG. 10**

1110

| G1 | R2 | G3 | R4 |
|----|----|----|----|
| B5 | G6 | B7 | G8 |
| G9 | R10 | G11 | R12 |
| B13 | G14 | B15 | G16 |

GRBG

Downsampling →

1115

| G1 | G3 |
|----|----|
| G9 | G11 |

**FIG. 11A**

1150

| R1 | G2 | R3 | G4 |
|----|----|----|----|
| G5 | B6 | G7 | B8 |
| R9 | G10 | R11 | G12 |
| G13 | B14 | G15 | B16 |

RGGB

Downsampling →

1155

| G5 | G7 |
|----|----|
| G13 | G15 |

**FIG. 11B**

## 1200

| |
|---|
| Obtaining a position of each of the plurality of target regions in the image |

1201

↓

| |
|---|
| Determining a deviation distance between each target region and a center of the image based on the position of the target region |

1203

↓

| |
|---|
| Determining a weight for each target region based on the deviation distance of the target region |

1205

↓

| |
|---|
| Determining a current brightness by performing a weighted average on the current brightness of each target region based on the weight of each target region |

1207

## FIG. 12

Storage 1302 — Processor 1304 — capture device 1306

**FIG. 13**

**FIG. 14**

**EP 3 967 024 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008226279 A1
- US 2010271507 A1
- US 2007177050 A1
- CN 106385544 A
- CN 104994306 A